# EUROPEAN PATENT APPLICATION

(11) **EP 4 571 987 A1**
(43) Date of publication of application: **18.06.2025**
(21) Application number: 23915374.5
(22) Date of filing: 13.01.2023
(51) Int. Cl.: H01M 50/342, H01M 50/102

(54) **BATTERY CELL, BATTERY, AND ELECTRIC DEVICE**

(71) Applicant: Contemporary Amperex Technology (Hong Kong) Limited, Hong Kong (HK)
(72) Inventor: ZHOU, Wenlin, Ningde, Fujian 352100 (CN); LI, Quankun, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2023/072117
(87) International publication number: WO 2024/148605

(57) **Abstract**

The present application provides a battery cell, a battery and an electric device, relating to the field of batteries. The battery cell includes electrode assemblies, a shell, and a pressure relief mechanism. The shell is used to accommodate the electrode assemblies. The pressure relief mechanism is provided on a lower portion of the shell and integrally formed with the shell. During normal use of the battery cell, the pressure relief mechanism is located at the lower portion of the shell. Compared with the prior art in which the pressure relief mechanism is welded to the end cover, the present application makes the pressure relief mechanism and the shell formed integrally, thereby avoiding leakage caused by welding defects. In addition, the ability of the pressure relief mechanism to resist external impacts can also be enhanced. At the same time, since the electrolytic solution inside the shell may cause creep deformation or impact on the pressure relief mechanism, that the pressure relief mechanism and the shell are integrally formed can improve the rigidity of the pressure relief mechanism, so that the pressure relief mechanism has a stronger resistance to the creep deformation and impact of the electrolytic solution, which is beneficial to increase the life of the pressure relief mechanism and reduce the risk of leakage in the pressure relief mechanism.

## Description

### Technical Field

The present application relates to the field of battery technology, and specifically, to a battery cell, a battery and an electric device.

### Background Art

Batteries are widely used in the field of new energy, such as electric vehicles and new energy vehicles. New energy vehicles and electric vehicles have become a new development trend in the automobile industry. The end cover of the battery is provided with a pressure relief mechanism for releasing the internal pressure when the internal pressure of the battery reaches the detonation pressure. However, the pressure relief mechanism is prone to leakage.

### Summary

An object of embodiments of the present application is to provide a battery cell, a battery and an electric device, which aim to improve the problem of easy leakage of the pressure relief mechanism in related arts.

In a first aspect, embodiments of the present application provide a battery cell, which includes at least one electrode assembly, a shell and a pressure relief mechanism, wherein the shell is used to accommodate the at least one electrode assembly, and the pressure relief mechanism is arranged at a lower portion of the shell and is integrally formed with the shell.

In the above technical solution, during normal use of the battery cell, the pressure relief mechanism is located at the lower portion of the shell. Compared with the prior art in which the pressure relief mechanism is welded to the end cover, the present application makes the pressure relief mechanism and the shell formed integrally, thereby avoiding leakage caused by welding defects. In addition, the ability of the pressure relief mechanism to resist external impacts can also be enhanced. At the same time, since the electrolytic solution inside the shell may cause creep deformation or impact on the pressure relief mechanism, that the pressure relief mechanism and the shell are integrally formed can improve the rigidity of the pressure relief mechanism, so that the pressure relief mechanism has a stronger resistance to the creep deformation and impact of the electrolytic solution, which is beneficial to increase the life of the pressure relief mechanism and reduce the risk of leakage in the pressure relief mechanism.

As an optional technical solution of the embodiments of the present application, the pressure relief mechanism is provided below the median vertical plane of the shell which is perpendicular to a height direction thereof.

In the above technical solution, the pressure of the electrolytic solution is relatively high below the median vertical plane in the height direction of the shell, and the pressure relief mechanism is more likely to leak. In view of the scenario where the pressure relief mechanism is provided below the median vertical plane in the height direction of the shell, the present application makes the pressure relief mechanism and the shell integrally formed, which can enhance the strength and rigidity of the pressure relief mechanism, improve the impact resistance and creep deformation resistance of the pressure relief mechanism, and reduce the risk of leakage in the pressure relief mechanism.

As an optional technical solution of the embodiments of the present application, the shell has a wall part configured for supporting the at least one electrode assembly in a gravity direction, and the pressure relief mechanism is provided on the wall part and is integrally formed with the wall part.

In the above technical solution, the wall part supports the electrode assembly in the gravity direction, and the pressure of the electrolytic solution on the wall part is the greatest. If the pressure relief mechanism leaks, the outflow speed and the outflow amount of the electrolytic solution are both large. In view of the scenario where the pressure relief mechanism is provided on the wall part for supporting the electrode assembly, the present application makes the pressure relief mechanism and the wall part integrally formed, which can enhance the strength and rigidity of the pressure relief mechanism, improve the impact resistance and creep deformation resistance of the pressure relief mechanism, and reduce the risk of leakage in the pressure relief mechanism.

As an optional technical solution of the embodiments of the present application, the shell includes the wall part, the pressure relief mechanism is provided on the wall part, and the wall part has an opening region; the wall part has a first surface and a second surface provided opposite to each other in the thickness direction thereof; the pressure relief mechanism includes a score groove, the score groove is recessed in a direction from the first surface to the second surface, the score groove is provided along an edge of the opening region, and the opening region is configured to be able to be opened with the score groove as a boundary.

In the above technical solution, when forming the score groove, stamping or cold heading or other manners may be used, so that the groove wall of the score groove may undergo cold work hardening (the grain arrangement changes, resulting in lattice distortion, which reduces the metal plasticity and increases the material hardness), and its ability to resist external impact is enhanced, and it is not easily damaged by external impact. This helps reduce the risk of leakage from the pressure relief mechanism.

As an optional technical solution of the embodiments of the present application, the pressure relief mechanism includes at least one stage of depressed groove, and the at least one stage of depressed groove is arranged on the wall part in sequence in the direction from the first surface to the second surface; and a first groove bottom wall of the stage of depressed groove farthest away from the first surface has the opening region.

In the above technical solution, the at least one stage of depressed groove and the score groove are sequentially provided on the wall part in the direction from the first surface to the second surface. During forming, the depressed groove and the score groove can be formed stage by stage, thereby reducing the forming force that the wall part suffers and reducing the risk of cracks being generated on the wall part. The pressure relief mechanism is not prone to failure due to cracks generated at the position of the score groove, thereby improving the long-term reliability of the pressure relief device. When forming the at least one stage of depressed groove and the score groove, stamping or cold heading or other manners may be used, so that the groove walls of the depressed groove and the score groove may undergo cold work hardening (the grain arrangement changes, resulting in lattice distortion, which reduces the metal plasticity and increases the material hardness), and its ability to resist external impact is enhanced, and it is not easily damaged by external impact. This helps reduce the risk of leakage from the pressure relief mechanism.

As an optional technical solution of the embodiments of the present application, the pressure relief mechanism includes two stages of depressed grooves, and the two stages of depressed groove are provided in sequence in the direction from the first surface to the second surface; and one stage of the depressed groove is provided on the first surface, the other stage of the depressed groove is provided at the bottom surface of the one stage of depressed groove, and the score groove is provided at the bottom surface of the other one stage of the depressed groove.

In the above technical solution, two stages of depressed grooves are provided, the forming steps are fewer, and the forming is relatively simple. At the same time, due to cold working hardening, the rigidity, strength and hardness of the wall surface of the score groove can be more effectively improved, and the risk of leakage of the pressure relief mechanism can be effectively reduced, which is conducive to improving production efficiency and reducing production costs.

As an optional technical solution of the embodiments of the present application, the pressure relief mechanism includes a plurality of stages of score grooves, and the plurality of stages of score grooves are provided in sequence in the direction from the first surface to the second surface; and in adjacent two stages of score grooves, the stage of score groove away from the first surface is provided at the bottom surface of the stage of score groove close to the first surface.

In the above technical solution, the plurality of stages of score grooves are provided in sequence in the direction from the first surface to the second surface, which can reduce the forming depth of each stage of the score groove, so as to reduce the forming force that the wall part suffers during forming of each stage of the score groove and reduce the risk of cracks being generated on the wall part. In the process of machining the plurality of stages of score grooves stage by stage in the direction from the first surface to the second surface, the hardness of the residual portion of the region of the wall part where the score grooves are provided increases along with each machining of one stage of score groove, thereby improving the hardness of the residual portion of the wall part after the plurality of stages of score grooves are provided, enabling better long-term reliability, better impact resistance, and reduced probability of damage by external force impact.

As an optional technical solution of the embodiments of the present application, in the thickness direction, the surface of the opening region away from the first surface is flush with the second surface.

In the above technical solution, in the thickness direction, the opening region does not protrude from the second surface, so that the opening region occupies reduced internal space of the battery cell or occupies reduced internal space of the battery, which is beneficial to improving the energy density of the battery.

As an optional technical solution of the embodiments of the present application, the wall part partially protrudes from the second surface in a direction away from the first surface to form a reinforcement part; and the reinforcement part is provided surrounding the opening region.

In the above technical solution, the wall part partially protrudes from the second surface in a direction away from the first surface to form a reinforcement part, so that when the wall part is deformed, the reinforcement part can reduce the influence of the deformation on the score groove, thereby reducing the risk of leakage of the pressure relief mechanism.

As an optional technical solution of the embodiments of the present application, in the thickness direction, the surface of the opening region away from the first surface is flush with the surface of the reinforcement part away from the first surface.

In the above technical solution, in the thickness direction, the opening region does not protrude from the surface of the reinforcement part away from the first surface, and in this way, the opening region occupies reduced internal space of the battery cell or occupies reduced internal space of the battery, which is beneficial to improving the energy density of the battery.

As an optional technical solution of the embodiments of the present application, in the thickness direction, the height of the reinforcement part protruding from the second surface is A, which satisfies: 0.5 mm ≤ A ≤ 4 mm.

In the above technical solution, the height of the reinforcement part protruding from the second surface in the thickness direction is limited to between 0.5 mm and 4 mm, which not only can make the reinforcement part have a better reinforcing effect, but also does not occupy too much internal space of the battery cell or the battery, and can better ensure the energy density of the battery. When A < 0.5mm, the height of the reinforcement part protruding from the second surface in the thickness direction is small, and the reinforcing effect is not obvious. When A>4mm, the height of the reinforcement part protruding from the second surface in the thickness direction is large, occupying a large space and affecting the energy density of the battery.

As an optional technical solution of the embodiments of the present application, 1mm≤A≤52.5mm.

In the above technical solution, the height of the reinforcement part protruding from the second surface in the thickness direction is limited to between 1 mm and 2.5 mm, which can improve the reinforcing effect of the reinforcement part, and occupy small internal space of the battery cell or the battery.

As an optional technical solution of the embodiments of the present application, the opening region is provided bending in the thickness direction.

In the above technical solution, by making the opening region bend in the thickness direction, when the wall part is subjected to external impact, the wall part may deform in the bending direction, thereby absorbing the energy of the external impact, so as to reduce the influence of the external impact on the portion where the score groove is located, and to a certain extent avoid the portion where the score groove is located from being damaged due to external impact. In addition, the bending opening region is similar to a stress concentration region during pressure relief, making the first groove bottom wall easier to be opened at the position of the score groove. Under the same detonation pressure, the depth of the score groove may be smaller and the thickness of the first groove bottom wall at the position of the score groove may be greater, so that the first groove bottom wall is not easy to be opened by external interference at the position of the score groove, thereby reducing the risk of leakage of the pressure relief mechanism.

As an optional technical solution of the embodiments of the present application, the opening region bends in the direction from the second surface to the first surface.

In the above technical solution, when the opening region bends in the direction from the second surface to the first surface, the gas inside the battery cell may generate, when acting on the opening region, a pulling force on the first groove bottom wall at the position of the score groove, so that the first groove bottom wall is easy to be opened at the position of the score groove, and under the same detonation pressure, the depth of the score groove may be smaller and the thickness of the first groove bottom wall at the position of the score groove may be greater, so that the first groove bottom wall is not easy to be opened by external interference at the position of the score groove, thereby reducing the risk of leakage of the pressure relief mechanism. When the electrolytic solution acts on the opening region, the acting force is relatively small. Although a pulling force is generated on the first groove bottom wall at the position of the score groove, it is not enough to cause the score groove to be opened. In addition, the pulling force generated on the first groove bottom wall at the position of the score groove disperses the acting force of the electrolytic solution, making the amplitude of the opening region reduced, and enabling the pressure relief mechanism to be not easy to open under the action of the electrolytic solution, thereby reducing the risk of leakage of the pressure relief mechanism.

As an optional technical solution of the embodiments of the present application, the pressure relief mechanism includes at least one stage of depressed groove, and the at least one stage of depressed groove is arranged on the wall part in sequence in the direction from the first surface to the second surface; and a first groove bottom wall of the stage of depressed groove farthest away from the first surface has the opening region; the first groove bottom wall includes a main body region, the main body region is provided surrounding the opening region, and the score groove is provided between the opening region and the main body region; in the thickness direction, the main body region has a third surface and a fourth surface, the distance between the third surface and the fourth surface is B, the opening region has a fifth surface away from the second surface, the third surface and the fifth surface are located on the same side of the first groove bottom wall, and the maximum distance between the third surface and the fifth surface is C, satisfying: B/10≤C≤B.

In the above technical solution, the distance between the third surface and the fourth surface in the thickness direction is 1 to 10 times the maximum distance between the third surface and the fifth surface in the thickness direction, thus reflecting the bending degree of the opening region. When C>B, it means that the bending degree of the opening region is too large, and it is easy to be affected by external impact, causing the first groove bottom wall to crack at the position of the score groove. If C<B/10, it means that the bending degree of the opening region is too small, which affects the release of stress inside the score groove.

As an optional technical solution of the embodiments of the present application, the first surface is the outer surface of the wall part.

In the above technical solution, when the first surface is the outer surface of the wall part, the position of the first groove bottom wall is away from the first surface in the thickness direction, so that the score groove provided on the first groove bottom wall is not easily affected by external impact, and the pressure relief mechanism is not easily opened due to external impact, thereby reducing the risk of leakage of the pressure relief mechanism.

As an optional technical solution of the embodiments of the present application, the pressure relief mechanism includes at least one stage of depressed groove, and the at least one stage of depressed groove is arranged on the wall part in sequence in the direction from the first surface to the second surface; and a first groove bottom wall of the stage of depressed groove farthest away from the first surface has the opening region; the strength of the wall part is D₁, the strength of the second groove bottom wall of the stage of depressed groove closest to the first surface is D₂, and the strength of the first groove bottom wall at the position of the score groove is D₃, satisfying: D₃>D₂≥D₁; and/or the hardness of the wall part is E₁, the hardness of the second groove bottom wall is E₂, and the hardness of the first groove bottom wall at the position of the score groove is E₃, satisfying: E₃>E₂≥E₁; and/or the rigidity of the wall part is F₁, the rigidity of the second groove bottom wall is F₂, and the rigidity of the first groove bottom wall at the position of the score groove F₃, satisfying: F₃>F₂≥F₁.

In the above technical solution, when the strength of the second groove bottom wall is greater than the strength of the wall part, it is equivalent to providing a reinforcement member around the score groove, so that when the wall part is subjected to external impact, the risk of damage to the first groove bottom wall at the position of the score groove is reduced, and the pressure relief mechanism has better tolerance to external impact. In addition, although the strength of the first groove bottom wall is higher at the position of the score groove, its hardness is also higher, and the ductility of the material decreases (the material becomes brittle), so it is also easy to open the valve under the action of the internal gas. In this way, under the same detonation pressure, the thickness of the first groove bottom wall at the position of the score groove can be larger to enhance the resistance to external impact, so that the pressure relief mechanism has better long-term reliability. When forming the depressed groove and the score groove, stamping or cold heading or other manners may be used, so that the groove walls of the depressed groove and the score groove may be cold-work hardened, so that the strengths, rigidities and hardnesses of the second groove bottom wall and the first groove bottom wall at the position of the score groove are correspondingly improved.

As an optional technical solution of the embodiments of the present application, 1.2E₁≤ E₂≤ 2.5E₁.

In the above technical solution, the hardness of the second groove bottom wall is 1.2 to 2.5 times the hardness of the wall part, so that the second groove bottom wall can block external objects and reduce the risk of external objects acting at the position of the score groove.

As an optional technical solution of the embodiments of the present application, 2.5E₁<E₃≤5E₁.

In the above technical solution, the hardness of the first groove bottom wall at the position of the score groove is 2.5 to 5 (not including 2.5) times the hardness of the wall part, making the first groove bottom wall more brittle at the position of the score groove and easily opened under the action of internal pressure.

As an optional technical solution of the embodiments of the present application, 5HBW≤ E₁≤ 150HBW.

In the above technical solution, when the strength of the wall part is 5 -150 HBW, the wall part has a strong impact resistance and good tolerance to external impact.

As an optional technical solution of the embodiments of the present application, 5HBW≤ E₃≤ 200HBW.

In the above technical solution, when the strength of the first groove bottom wall is 5-2000 HBW at the position of the score groove, even if the wall part is subjected to external impact, the first groove bottom wall is not easily damaged at the position of the score groove, and the pressure relief mechanism has better tolerance to external impact.

As an optional technical solution of the embodiments of the present application, the minimum thickness of the first groove bottom wall at the position of the score groove is W₁, satisfying: 5HBW/mm≤5E3/W₁≤510000 HBW/mm, preferably, 190HBW/mm≤E₃/W₁≤4000 HBW/mm.

In the above technical solution, not only the influence of the thickness of the first groove bottom wall at the position of the score groove on the performance of the shell is taken into consideration, but also the influence of the hardness of the first groove bottom wall at the position of the score groove on the performance of the shell is taken into consideration, 5HBW/mm≤5E3/W₁≤510000 HBW/mm, which can not only ensure that the first groove bottom wall has sufficient strength at the position of the score groove under normal use conditions of the battery cell and is not easily damaged by fatigue, thereby increasing the service life of the battery cell, but also enable the shell to release pressure in time through the opening region when the battery cell has thermal runaway, thereby reducing the risk of explosion of the battery cell and improving the safety of the battery cell. 190HBW/mm≤E₃/W₁≤4000 HBW/mm, which makes the comprehensive performance of the shell better, ensuring that in the case where the opening region can be opened in time when the battery cell has thermal runaway, the first groove bottom wall has sufficient strength at the position of the score groove under normal use conditions of the battery cell. Under the premise of ensuring the safety of the battery cells, the service life of the battery cells is increased.

As an optional technical solution of the embodiments of the present application, the minimum thickness of the wall part at the position of the score groove is W₁, and the minimum thickness of the wall part is W₂, which satisfies: 0.05≤W₁/W₂≤0.95.

In the above technical solution, the score groove is formed on the wall part by stamping or cold heading, and W₁/W₂ is controlled between 0.05 and 0.95, which can achieve the purpose of refining the grains of the wall part at the position of the score groove, improve the material mechanical properties of the wall part at the position of the score groove, improve the toughness and anti-fatigue strength of the wall part at the position of the score groove, reduce the risk of the wall part at the position of the score groove being damaged during normal use of the battery cell, increase the service life of the battery cell, and reduce the risk of explosion of the battery cell during thermal runaway.

As an optional technical solution of the embodiments of the present application, 0.12≤W₁/W₂≤0.8; preferably, 0.2≤W₁/W₂≤0.5.

In the above technical solution, when 0.12≤5W₁/W₂≤0.8, the comprehensive performance of the wall part is better, and the wall part is ensured to have sufficient strength at the position of the score groove during normal use of the battery cell in the case where it is ensured that the wall part can be destroyed in time at the position of the score groove when the battery cell has thermal runaway. When 0.2≤W₁/W₂≤0.5, the risk of the wall part being destroyed at the position of the score groove under normal use conditions of the battery cell is further reduced, and it is ensured that the wall part is destroyed in time at the position of the score groove when the battery cell has thermal runaway, thereby improving the timeliness of pressure relief.

As an optional technical solution of the embodiments of the present application, 0.02mm≤W₁≤ 1.6mm; preferably, 0.06mm≤W₁≤ 0.4mm.

In the above technical solution, if W₁ is too small, the score groove is difficult to form, and the wall part is easily damaged at the position of the score groove during the forming process; if W₁ is too large, the wall part is more difficult to be destroyed at the position of the score groove during thermal runaway of the battery cell, resulting in easy occurrence of situation in which the pressure is not released in time. Therefore, when 0.02mm≤W₁≤1.6mm, the timeliness of pressure relief of the battery cell during thermal runaway is improved, while reducing the difficulty of forming the score groove. When 0.06mm≤W₁≤0.4mm, the difficulty of forming the score groove is further reduced, and the timeliness of pressure relief of the battery cell during thermal runaway is improved.

As an optional technical solution of the embodiments of the present application, 1mm≤W₂≤5mm; preferably, 1.2mm≤W₂≤3.5mm; preferably, 2mm≤W₂≤3mm.

In the above technical solution, if W₂ is too large, the thickness of the wall part is relatively large, more material is used for the shell, the weight of the shell is large, and the economy is poor. If W₂ is too small, the thickness of the wall part is small and the anti-deformation ability of the shell is poor. Therefore, 1mm≤W₂≤5mm makes the shell more economical and have better anti-deformation ability. When 1.2mm≤W₂≤3.5mm, the shell is enabled to be more economical and have better anti-deformation ability.

As an optional technical solution of the embodiments of the present application, the pressure relief mechanism includes at least one stage of depressed groove, and the at least one stage of depressed groove is arranged on the wall part in sequence in the direction from the first surface to the second surface; a first groove bottom wall of the stage of depressed groove farthest away from the first surface has the opening region; and the average grain size of the wall part is G₁, the average grain size of the second groove bottom wall of the stage of the depressed groove closest to the first surface is G₂, and the average grain size of the first groove bottom wall at the position of the score groove is G₃, satisfying: G₁ >G₂>G₃.

**In** the above technical solution, when the depressed groove and the score groove are formed by stamping or cold heading or other manners, the grains of the material are broken and become finer. Therefore, the average grain size of the first groove bottom wall at the position of the score groove is smaller than the average grain size of the second groove bottom wall, and the average grain size of the second groove bottom wall is smaller than the average grain size of the wall part.

As an optional technical solution of the embodiments of the present application, G₃/G₁≤0.9.

**In** the above technical scheme, the average grain size of the first groove bottom wall at the position of the score groove is significantly different from the average grain size of the wall part, and the average grain size of the first groove bottom wall at the position of the score groove is reduced, improving the mechanical properties of the material of the first groove bottom wall at the position of the score groove, and further improving the toughness and fatigue resistance of the first groove bottom wall at the position of the score groove.

As an optional technical solution of the embodiments of the present application, G₃/G₁≥0.05; preferably, 0.1≤G₃/G₁≤0.5.

In the above technical solution, if G₃/G₁ is too small, the depressed groove and the score groove are difficult to form, and the strength of the first groove bottom wall is too large at the position of the score groove, the first groove bottom wall is more difficult to be destroyed at the position of the score groove during thermal runaway of the battery cell, resulting in easy occurrence of situation in which the pressure is not released in time. Therefore, when G₃/G₁≥0.05, the difficulty of forming the depressed groove and the score groove is reduced, and the timeliness of pressure relief of the battery cell during thermal runaway is improved. When 0.1≤G₃/G₁≤0.5, the comprehensive performance of the wall part is better, and the first groove bottom wall is ensured to have sufficient strength at the position of the score groove during normal use of the battery cell in the case where it is ensured that the first groove bottom wall can be destroyed in time at the position of the score groove when the battery cell has thermal runaway.

As an optional technical solution of the embodiments of the present application, 0.4µm≤G₃≤75µm; preferably, 1µm≤G₃≤10µm.

In the above technical solution, if G₃ is too large, the toughness and anti-fatigue strength of the first groove bottom wall at the position of the score groove are poor; and if G₃ is too small, the depressed groove and the score groove are difficult to form, the strength of the first groove bottom wall is too large at the position of the score groove, and the first groove bottom wall is more difficult to be destroyed at the position of the score groove during thermal runaway of the battery cell, resulting in easy occurrence of situation in which the pressure is not released in time. Therefore, when 0.4µm≤G₃≤75µm, on the one hand, the difficulty of forming the depressed groove and the score groove is reduced, and the timeliness of pressure relief of the battery cell during thermal runaway is improved; and on the other hand, the toughness and anti-fatigue strength of the first groove bottom wall at the position of the score groove is improved, and the risk of damage to the first groove bottom wall the position of the score groove under normal use conditions of the battery cell is reduced.

As an optional technical solution of the embodiments of the present application, 10µm≤G₁≤150µm; preferably, 30µm≤G₁≤100µm.

As an optional technical solution of the embodiments of the present application, the minimum thickness of the first groove bottom wall at the position of the score groove is W₁, and the average grain size of the first groove bottom wall at the position of the score groove is G₃, satisfying: 1≤W₁/G₃≤100; preferably, 5≤W₁/G₃≤20.

In the above technical solution, if W₁/G₃ is too small, in the thickness direction of the wall, the fewer the number of grain layers of the first groove bottom wall at the position of the score groove, the smaller the anti-fatigue strength of the first groove bottom wall at the position of the score groove; and if W₁/G₃ is too large, in the thickness direction, the number of grain layers of the first groove bottom wall at the position of the score groove is too large, and the strength of the first groove bottom wall at the position of the score groove is too large, which easily lead to the risk that the first groove bottom wall cannot be destroyed in time at the position of the score groove during thermal runaway of the battery cell. Therefore, when 1≤W₁/G₃≤100, on the one hand, the first groove bottom wall is enabled to to have more grain layers in the thickness direction at the position of the score groove, improving the anti-fatigue strength of the first groove bottom wall at the position of the score groove and reducing the risk of damage to the first groove bottom wall at the position of the score groove under normal use conditions of the battery cell; and on the other hand, the first groove bottom wall is enabled to be damaged more in time at the position of the score groove when the battery cell is in thermal runaway, thereby achieving timely pressure relief. When 5≤W₁/G₃≤20, the comprehensive performance of the wall part is better, and the first groove bottom wall is ensured to have sufficient anti-fatigue strength at the position of the score groove under normal use conditions of the battery cell in the case where it is ensured that the first groove bottom wall can be destroyed in time at the position of the score groove when the battery cell has thermal runaway, increasing the service life of the battery cell.

As an optional technical solution of the embodiments of the present application, the shell includes a casing and an end cover, the casing has an opening, the end cover is connected to the casing and seals the opening, and the pressure relief mechanism is provided on the end cover.

In the above technical solution, the pressure relief mechanism is provided on the end cover, and the end cover is located at the lower portion of the shell, corresponding to the scenario where the battery cell is inverted (placed upside down).

As an optional technical solution of the embodiments of the present application, the shell includes a casing and an end cover, the casing has an opening, the end cover is connected to the casing and seals the opening, and the pressure relief mechanism is provided on the shell.

In the above technical solution, the pressure relief mechanism is provided on the shell, and the pressure relief mechanism is located at the lower portion of the shell.

As an optional technical solution of the embodiments of the present application, in the first direction, two ends of the shell each have an opening, the shell includes two end covers, and each of the end covers seals one corresponding opening.

In a second aspect, embodiments of the present application further provide a battery, including at least one battery cell above.

In a third aspect, embodiments of the present application further provide an electric device, including at least one battery above. The battery is used to provide electric energy for the electric device.

### Brief Description of Drawings

In order to illustrate the technical solutions of the embodiments of the present application more clearly, the drawings required to be used in the embodiments will be briefly introduced below. It should be understood that the drawings below only show some embodiments of the present application and thus should not be construed as limiting the scope. Those of ordinary skill in the art may also obtain other relevant drawings based on the drawings without paying creative efforts.
FIG. 1 is a schematic structural diagram of a vehicle provided by some embodiments of the present application;
FIG. 2 is an exploded view of a battery provided by some embodiments of the present application;
FIG. 3 is a schematic structural diagram of a battery cell provided by some embodiments of the present application;
FIG. 4 is an exploded view of a battery cell provided by some embodiments of the present application;
FIG. 5 is a schematic structural diagram of a wall part provided by some embodiments of the present application;
FIG. 6 is a schematic top view of a wall part provided by some embodiments of the present application;
FIG. 7 is a sectional view of the I-I position in FIG. 6;
FIG. 8 is an enlarged view of part J of FIG. 7;
FIG. 9 is a schematic top view of a wall part provided by other embodiments of the present application;
FIG. 10 is a sectional view of the L-L position in FIG. 9;
FIG. 11 is an enlarged view of part M of FIG. 10;
FIG. 12 is a schematic top view of a wall part provided by yet some embodiments of the present application;
FIG. 13 is a sectional view of the N-N position in FIG. 12;
FIG. 14 is an enlarged view of part Q of FIG. 13;
FIG. 15 is a sectional view of the P-P position in FIG. 12; and
FIG. 16 is an enlarged view of part R of FIG. 15.

Reference signs: 10-box; 11-first part; 12-second part; 20-battery cell; 21-shell; 211-end cover; 212-casing; 213-wall part; 2131-first surface; 2132-second surface; 2133-reinforcement part; 22-electrode assembly; 23-pressure relief mechanism; 231-depressed groove; 2311-second groove bottom wall; 2312-first groove bottom wall; 23121-opening region; 23121a-fifth surface; 23121b-straight region; 23121c-connecting region; 23122-main body region; 23122a-third surface; 23122b-fourth surface; 232-score groove; 24-median vertical plane; 100-battery; 200-controller; 300-motor; 1000-vehicle.

### Detailed Description of Embodiments

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some, not all of the embodiments of the present application. Based on the embodiments in the present application, all other embodiments obtained by those of ordinary skill in the art without paying creative efforts fall within the scope of protection of the present application.

Unless otherwise defined, all technical and scientific terms used in the present application have the same meanings as commonly understood by those skilled in the art of the present application; the terms used in the description of the present application are for the purpose of describing specific examples only and are not intended to limit the present application; the terms "including" and "having" and any variations thereof in the description and claims of the present application and the above description of the drawings are intended to cover non-exclusive inclusion. The terms "first", "second", etc. in the description and claims of the present application or the above-mentioned drawings are used to distinguish different objects, rather than to describe a specific order or priority relationship

Reference made herein to "embodiment/example" means that a particular feature, structure, or characteristic described in connection with the embodiment may be included in at least one embodiment/example of the present application. The phases occurring in various places in the specification do not necessarily all refer to the same embodiment, nor are separate or alternative embodiments mutually exclusive of other embodiments.

In the description of the present application, it should be indicated that unless otherwise clearly specified and limited, technical terms such as "install", "link", "connect" and "attach" should be understood in a broad sense, for example, it may be a fixed connection, or a detachable connection, or an integral connection; it may be a direct connection, or an indirect connection through an intermediary, or it may be an internal communication between two elements. Those of ordinary skill in the art may understand the specific meanings of the above terms in the present application according to specific situations.

The term "and/or" in the present application indicates only an association relationship describing associated objects, meaning that there may be three kinds of relationships. For example, A and/or B may indicate three situations: there is only A, there are both A and B, and there is only B. In addition, the character "/" in the present application generally indicates that the associated objects therebefore and thereafter have an "or" relationship.

In the embodiments of the present application, the same reference signs represent the same components, and for the sake of simplicity, detailed descriptions of the same components in different embodiments are omitted. It should be understood that the thickness, length, width and other dimensions of various components, as well as the overall thickness, length, width and other dimensions of the integrated device, in the embodiments of the present application shown in the drawings are only illustrative and should not constitute any limitation to the present application.

"Multiple/plurality of" appearing in the present application means two or more (including two).

In the present application, the battery cell may include lithium ion secondary battery, lithium ion primary battery, lithium sulfur battery, sodium lithium ion battery, sodium ion battery or magnesium ion battery, etc., which is not limited in the embodiments of the present application. The battery cell may be in a shape of cylinder, flat body, cuboid or in other shape, which is not limited in the embodiments of the present application. Battery cells are generally divided into three types according to packaging methods: cylindrical battery cells, square battery cells and pouch battery cells, which are not limited in the embodiments of the present application.

The battery mentioned in the embodiments of the present application refers to a single physical module that includes one or more battery cells to provide higher voltage and capacity. For example, the battery mentioned in the present application may include a battery module or a battery pack, and the like. The battery generally includes a box for packaging one or more battery cells. The box may prevent a liquid or other foreign object from affecting the charging or discharging of the battery cells.

The battery cell includes an electrode assembly and an electrolytic solution, the electrode assembly being composed of a positive electrode plate, a negative electrode plate and a separator. The battery cell works mainly by moving metal ions between the positive electrode plate and negative electrode plate. The positive electrode plate includes a positive current collector and a positive electrode active material layer. The positive electrode active material layer is coated on the surface of the positive current collector, the positive current collector not coated with the positive electrode active material layer protrudes from the positive current collector coated with the positive electrode active material layer, and the positive current collector not coated with the positive electrode active material layer is used as the positive tab. Taking a lithium-ion battery as an example, the material of the positive current collector may be aluminum, and the positive electrode active material may be lithium cobaltate, lithium iron phosphate, ternary lithium, or lithium manganate, etc. The negative electrode plate includes a negative current collector and a negative electrode active material layer. The negative electrode active material layer is coated on the surface of the negative current collector, the negative current collector not coated with the negative electrode active material layer protrudes from the negative current collector coated with the negative electrode active material layer, and the negative current collector not coated with the negative electrode active material layer is used as the negative tab. The material of the negative current collector may be copper, and the negative electrode active material may be carbon or silicon, etc. In order to ensure that a large current passes without fusing, the number of positive tabs is multiple and the positive tabs are stacked together, and the number of negative tabs is multiple and the negative tabs are stacked together. The material of the separator may be PP (polypropylene) or PE (polyethylene), etc. In addition, the electrode assembly may be in a winding structure or may be in a laminated/stacked structure, which is not limited in the embodiments of the present application.

At present, from the perspective of the development of the market situation, the application of batteries is becoming more and more extensive. The batteries are not only used in energy storage power source systems such as hydraulic, thermal, wind and solar power plants, but also widely used in electric means of transport such as electric bicycles, electric motorcycles, electric vehicles, as well as fields of military equipment and aerospace, etc. With the continuous expansion of battery application fields, its market demand is also constantly increasing.

For the development of battery technology, many design factors need to be considered at the same time, for example, performance parameters such as energy density, cycle life, discharge capacity, and charge-discharge rate. In addition, the safety of the battery also needs to be considered.

For battery cells, in order to ensure the safety of the battery cells, in the prior art, a pressure relief mechanism is welded onto the end cover of the battery cell, the pressure relief mechanism is provided with a score groove, which defines a pressure relief portion, where when the internal pressure of the battery cell reaches the detonation pressure, the pressure relief portion opens to release the pressure inside the battery cell, thereby reducing the risk of explosion or fire of the battery cell.

The inventors have found through researches that welding the pressure relief mechanism to the end cover in the prior art is prone to welding defects, and the electrolytic solution in the battery cell is prone to leak from the defective position, especially when the battery cell is used upside down, the leakage of the pressure relief mechanism is aggravated. In addition, when the pressure relief mechanism is welded to the end cover, the high temperature generated by welding may affect the score groove, and welding may cause the material to expand when heated and contract when cooled to pull the score groove, resulting in a shortened life of the pressure relief mechanism and that the pressure relief mechanism may also be easily opened under the action of the electrolytic solution, causing leakage. **In** addition, the pressure relief mechanism is easily opened by external impact, which can also cause leakage of the pressure relief mechanism. Further, when the battery cell is used upside down, the electrolytic solution in the battery cell may have a creep deformation effect on the pressure relief mechanism, which is also likely to shorten the life of the pressure relief mechanism and make the pressure relief mechanism prone to leakage.

In view of this, embodiments of the present application provide a battery cell, which includes at least one electrode assembly, a shell and a pressure relief mechanism, wherein the shell is used to accommodate the at least one electrode assembly, and the pressure relief mechanism is arranged at a lower portion of the shell and is integrally formed with the shell.

During normal use of the battery cell, the pressure relief mechanism is located at the lower portion of the shell. Compared with the prior art in which the pressure relief mechanism is welded to the end cover, the present application makes the pressure relief mechanism and the shell formed integrally, thereby avoiding leakage caused by welding defects. In addition, the ability of the pressure relief mechanism to resist external impacts can also be enhanced. At the same time, since the electrolytic solution inside the shell may cause creep deformation or impact on the pressure relief mechanism, that the pressure relief mechanism and the shell are integrally formed can improve the rigidity of the pressure relief mechanism, so that the pressure relief mechanism has a stronger resistance to the creep deformation and impact of the electrolytic solution, which is beneficial to increase the life of the pressure relief mechanism and reduce the risk of leakage in the pressure relief mechanism.

The technical solutions described in the embodiments of the present application are applicable to the battery and the electric device using the battery.

The electric device may be vehicle, mobile phone, portable device, laptop, ship, spacecraft, electric toy and electric tool, etc. The spacecraft includes airplane, rocket, space shuttle and space ship, etc. The electric toy includes a fixed or mobile electric toy, for example, game console, electric car toy, electric ship toy and electric airplane toy, etc. The electric tool includes metal cutting electric tool, grinding electric tool, assembly electric tool and railway electric tool, for example, electric drill, electric grinder, electric wrench, electric screwdriver, electric hammer, impact electric drill, concrete vibrator and electric planer, etc. The embodiments of the present application do not specifically limit the above electric device.

For convenient description, the following embodiments are described by taking a vehicle 1000 as an electrical device as example.

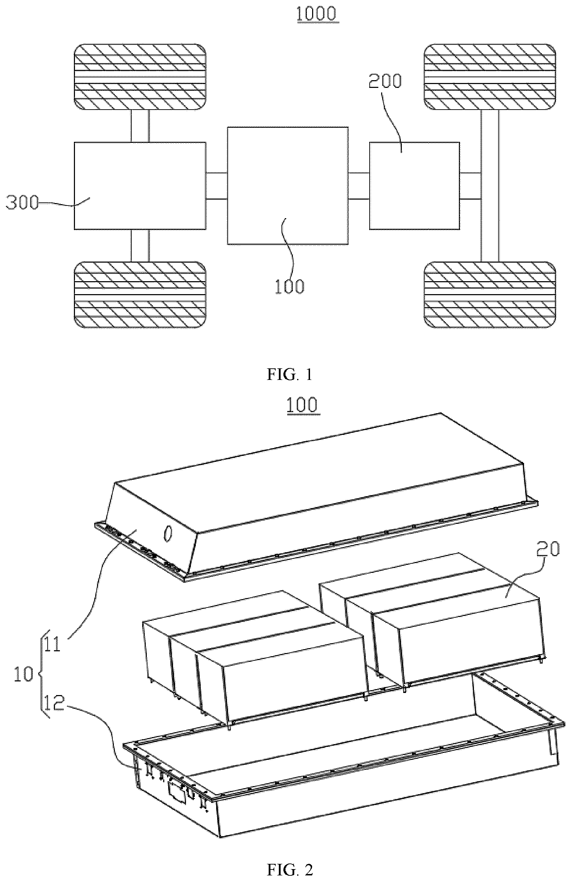

Referring to FIG. 1, FIG. 1 is a schematic structural diagram of a vehicle 1000 provided by some embodiments of the present application. The vehicle 1000 may be an oil-fueled vehicle, a gas vehicle, or a new energy vehicle. The new energy vehicle may be a pure electric vehicle, a hybrid electric vehicle, an extended-range vehicle, or the like. A battery 100 is disposed inside the vehicle 1000, and the battery 100 may be disposed at a bottom, head or tail of the vehicle 1000. The battery 100 may be used for supplying power to the vehicle 1000. For example, the battery 100 may be used as an operation power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply of the vehicle 1000, but also as a driving power supply of the vehicle 1000 to replace or partially replace fuel or natural gas to provide driving power for the vehicle 1000.

Referring to FIG. 2, FIG. 2 is an exploded view of a battery 100 provided by some embodiments of the present application. The battery 100 includes a box 10 and battery cells 20, and the battery cells 20 are accommodated in the box 10. In the above, the box 10 is used to provide an accommodation space for the battery cells 20, and the box 10 may be in a variety of structures. In some embodiments, the box 10 may include a first part 11 and a second part 12. The first part 11 and the second part 12 cover each other. The first part 11 and the second part 12 jointly define an accommodation space for accommodating the battery cells 20. The second part 12 may be in a hollow structure with one side open, and the first part 11 may be in a plate-like structure. The first part 11 covers the open side of the second part 12, so that the first part 11 and the second part 12 jointly define an accommodation space; and the first part 11 and the second part 12 may also be both in a hollow structure with one side open, and the open side of the first part 11 covers the open side of the second part 12. Of course, the box 10 formed by the first part 11 and the second part 12 may be in various shapes, such as a cylinder, a cuboid and so on.

In the battery 100, there may by multiple battery cells 20, and the multiple battery cells 20 may be in serial, parallel or hybrid connection with each other. The hybrid connection means that the multiple battery cells 20 are connected with each other both in series and in parallel. The plurality of battery cells 20 may be in serial, parallel or hybrid connection with each other, and then the whole composed of the plurality of battery cells 20 is accommodated in the box 10. Certainly, the battery 100 may be formed in the way that the plurality of battery cells 20 are first in serial or in parallel or in hybrid connection with each other to form battery modules, and then the plurality of battery modules are in serial or in parallel or in hybrid connection with each other to form a whole, and accommodated in the box 10. The battery 100 may further include other structures. For example, the battery 100 may further include a busbar component for realizing electrical connection between the multiple battery cells 20.

In the above, each battery cell 20 may be a secondary battery cell or a primary battery cell; or may also be a lithium-sulfur battery cell, a sodium-ion battery cell or a magnesium-ion battery cell, which is not limited thereto. The battery cell 20 may be in a shape of cylinder, flat body, cuboid or in other shape.

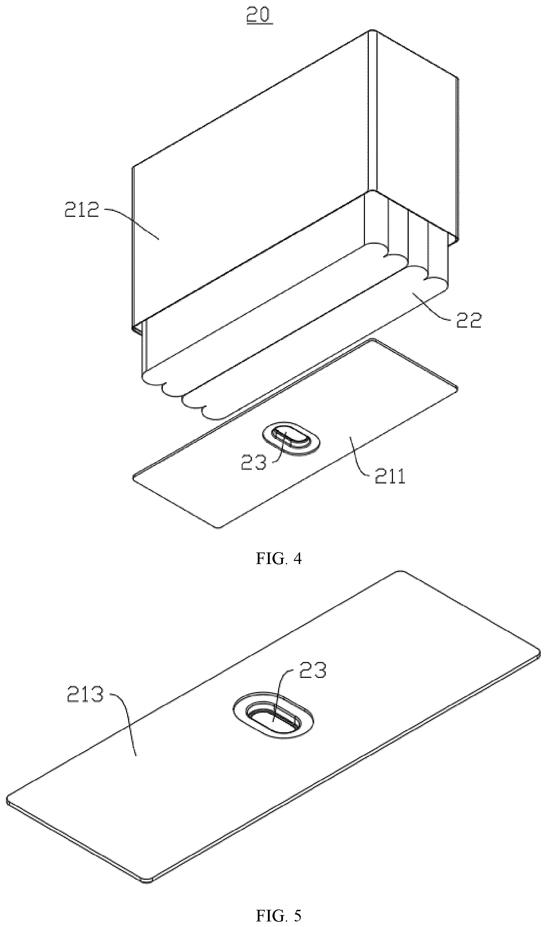

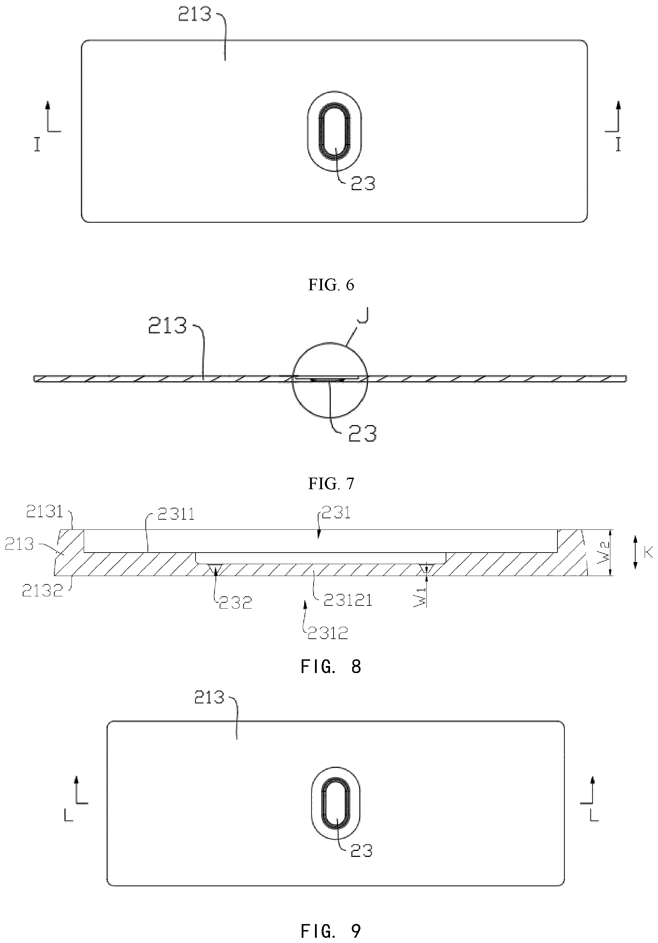

Referring to FIG. 3, FIG. 4, FIG. 5, FIG. 6, FIG. 7 and FIG. 8, FIG. 3 is a schematic structural diagram of a battery cell 20 provided by some embodiments of the present application. FIG. 4 is an exploded view of a battery cell 20 provided by some embodiments of the present application. FIG. 5 is a schematic structural diagram of a wall part 213 provided by some embodiments of the present application. FIG. 6 is a schematic top view of a wall part 213 provided by some embodiments of the present application. FIG. 7 is a sectional view of the I-I position in FIG. 6. FIG. 8 is an enlarged view of part J of FIG. 7. Embodiments of the present application provide a battery cell 20. The battery cell 20 includes electrode assemblies 22, a shell 21 and a pressure relief mechanism 23. The shell 21 is used to accommodate the electrode assemblies 22, and the pressure relief mechanism 23 is arranged at a lower portion of the shell 21 and is integrally formed with the shell 21.

The battery cell 20 refers to the smallest unit constituting the battery 100.

The shell 21 includes an end cover 211 and a casing 212. The casing 212 has an accommodation space open at one end, and the accommodation space is used to accommodate the electrode assemblies 22. The end cover 211 is connected to the casing 212 and seals the opening.

The end cover 211 refers to a component that covers the opening of the casing 212 to isolate the internal environment of the battery cell 20 from the external environment. Without limitation, the shape of the end cover 211 may be adapted to the shape of the casing 212 to fit the casing 212. Optionally, the end cover 211 may be made of a material with a certain hardness and strength (such as aluminum alloy). In this way, the end cover 211 is less likely to deform when subjected to extrusion and collision, enabling the battery cell 20 to have higher structural strength, and also improved safety performance. Functional components such as electrode terminals (not shown in the drawings) may be provided on the cover body 211. The electrode terminal may be used to be electrically connected with the electrode assembly 22 for outputting or inputting the electric energy of the battery cell 20. The end cover 211 may also be made of a variety of materials, such as copper, iron, aluminum, stainless steel, aluminum alloy, plastic, etc., which is not specially defined in the embodiment of the present application. In some embodiments, the battery cell 20 further includes an insulation member, the insulation member is provided at the inner side of the end cover 211, and the insulation member may be used to isolate the electrical connection parts in the casing 212 from the end cover 211 to reduce the risk of short circuit. Exemplarily, the insulation member may be plastic, rubber or the like.

The casing 212 is a component used to cooperate with the end cover 211 to form an internal environment of the battery cell 20, wherein the formed internal environment may be used to accommodate the electrode assemblies 22, the electrolytic solution, and other components. The casing 212 and the end cover 211 may be independent components, and the casing 212 may be provided with an opening, wherein the internal environment of the battery cell 20 may be formed by making the end cover 211 cover the opening at the opening. Without limitation, the end cover 211 and the casing 212 may also be integral. Specifically, the end cover 211 and the casing 212 may form a common joint surface before other components enter the casing, and when needing to package the inside of the casing 212, the end cover 211 is made to cover the casing 212. The casing 212 may be in various shapes and of various sizes, such as cuboid, cylinder, hexagonal prism and so on. Specifically, the shape of the casing 212 may be determined by the specific shape and size of the electrode assembly 22. The casing 212 may be made of a variety of materials, such as copper, iron, aluminum, stainless steel, aluminum alloy, plastic, etc., which is not specially defined in the embodiments of the present application.

The electrode assembly 22 is a component in the battery cell 20 where electrochemical reactions occur. One or more electrode assemblies 22 may be contained within the shell 21. The electrode assembly 22 is mainly formed by winding or stacking the positive electrode plate and the negative electrode plate, and a separator is generally provided between the positive electrode plate and the negative electrode plate. The portions of the positive electrode plate and the negative electrode plate that contain active material constitute the main body of the electrode assembly 22, and the portions of the positive electrode plate and the negative electrode plate that do not contain active material constitute respective tabs. The positive tab and the negative tab may be located together at one end of the main body or respectively located at two ends of the main body. During the charging and discharging processes of the battery 100, the positive active material and the negative active material react with the electrolytic solution.

The pressure relief mechanism 23 is a component used to release the internal pressure of the battery cell 20 when the internal pressure or temperature of the battery cell 20 reaches a detonation pressure.

Assuming that there is a virtual plane, the virtual plane is perpendicular to the height direction of the shell 21. In the height direction of the shell 21, the portion of the shell 21 above the virtual plane accounts for 30% of the height of the shell 21, and the portion of the shell 21 below the virtual plane accounts for 70% of the height of the shell 21. The lower portion refers to a portion of the shell 21 below the virtual plane in the height direction.

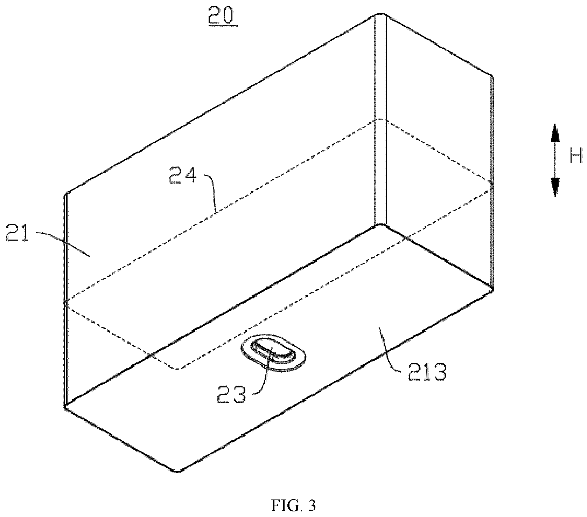

Referring to FIG. 3, the height direction of the shell 21 is H direction shown in the drawings.

Being Integrally formed refers to that the shell 21 and the pressure relief mechanism 23 are in an integral structure when provided. For example, the pressure relief mechanism 23 may be formed on the shell 21 by stamping or cold heading or other manners.

During normal use of the battery cell 20, the pressure relief mechanism 23 is located at the lower portion of the shell 21. Compared with the prior art in which the pressure relief mechanism 23 is welded to the end cover 211, the present application makes the pressure relief mechanism 23 and the shell 21 formed integrally, thereby avoiding leakage caused by welding defects. In addition, since the pressure relief mechanism 23 and the shell 21 are integrally formed, the strength of the pressure relief mechanism 23 is improved, and the ability of the pressure relief mechanism 23 to resist external impact is improved. At the same time, since the electrolytic solution inside the shell 21 may cause creep deformation or impact on the pressure relief mechanism 23, that the pressure relief mechanism 23 and the shell 21 are integrally formed can improve the rigidity of the pressure relief mechanism 23, so that the pressure relief mechanism 23 has a stronger resistance to the creep deformation and impact of the electrolytic solution, which is beneficial to increase the life of the pressure relief mechanism 23 and reduce the risk of leakage in the pressure relief mechanism 23.

Referring to FIG. 3, FIG. 4, FIG. 5, FIG. 6, FIG. 7 and FIG. 8, in some embodiments, the pressure relief mechanism 23 is disposed below a median vertical plane 24 of the shell 21 that is perpendicular to its height direction.

Referring to FIG. 3, the median vertical plane 24 is shown by dotted lines in FIG. 3. The median vertical plane 24 is perpendicular to the height direction of the shell 21. In the height direction of the shell 21, the portion of the shell 21 above the median vertical plane 24 accounts for 50% of the height of the shell 21, and the portion of the shell 21 below the median vertical plane 24 accounts for 50% of the height of the shell 21. The pressure relief mechanism 23 is provided below the median vertical plane 24.

The pressure of the electrolytic solution is relatively high below the median vertical plane 24 in the height direction of the shell 21, and the pressure relief mechanism 23 is more likely to leak. In view of the scenario where the pressure relief mechanism 23 is provided below the median vertical plane 24 in the height direction of the shell 21, the present application makes the pressure relief mechanism 23 and the shell 21 integrally formed, which can enhance the strength and rigidity of the pressure relief mechanism 23, improve the impact resistance and creep deformation resistance of the pressure relief mechanism 23, and reduce the risk of leakage in the pressure relief mechanism 23.

Referring to FIG. 3, FIG. 4, FIG. 5, FIG. 6, FIG. 7 and FIG. 8, in some embodiments, the shell 21 has a wall part 213 supporting the electrode assembly 22 in the gravity direction, and the pressure relief mechanism 23 is disposed on the wall part 213 and is integrally formed with the wall part 213.

The wall part 213 is a portion of the shell 21 that supports the electrode assembly 22 in the gravity direction. It can be understood that the wall part 213 is the bottom wall of the shell 21. The wall part 213 may be a wall of the casing 212 or may be the end cover 211. When the wall 213 is the end cover 211, it is a scenario where the battery cell 20 is used upside down.

The wall part 213 supports the electrode assembly 22 in the gravity direction, and the pressure of the electrolytic solution on the wall part 213 is the greatest. If the pressure relief mechanism 23 leaks, the outflow speed and the outflow amount of the electrolytic solution are both large. In view of the scenario where the pressure relief mechanism 23 is provided on the wall part 213 for supporting the electrode assembly 22, the present application makes the pressure relief mechanism 23 and the wall part 213 integrally formed, which can enhance the strength and rigidity of the pressure relief mechanism 23, improve the impact resistance and creep deformation resistance of the pressure relief mechanism 23, and reduce the risk of leakage in the pressure relief mechanism 23.

In some other embodiments, the shell 21 has a wall part 213 and a peripheral wall, the wall part 213 supports the electrode assembly 22 in the gravity direction, and the peripheral wall is disposed surrounding the periphery of the wall part 213. The pressure relief mechanism 23 is disposed on the peripheral wall and is integrally formed with the peripheral wall.

Referring to FIG. 3, FIG. 4, FIG. 5, FIG. 6, FIG. 7 and FIG. 8, in some embodiments, the shell 21 has a wall part 213, and the pressure relief mechanism 23 is disposed on the wall part 213. The wall part 213 has an opening region 23121. The wall part 213 has a first surface 2131 and a second surface 2132 that are opposite to each other in the thickness direction thereof. The pressure relief mechanism 23 includes a score groove 232, and the score groove 232 is recessed in the direction from the first surface 2131 to the second surface 2132. The score groove 232 is disposed along the edge of the opening region 23121, and the opening region 23121 is configured to be able to be opened with the score groove 232 as a boundary.

Referring to FIG. 8, the thickness direction may be K direction shown in the drawings.

The first surface 2131 and the second surface 2132 of the wall part 213 are two surfaces of the wall part 213 that are opposite to each other in the thickness direction thereof. The distance between the first surface 2131 and the second surface 2132 is the thickness of the wall part 213. Taking the wall part 213 as the end cover 211 as an example, the first surface 2131 may be the outer surface of the end cover 211, facing the outside of the battery cell 20, and the second surface 2132 may be the inner surface of the end cover 211, facing the inside of the battery cell 20.

The wall part 213 is provided with a score groove 232. The score groove 232 may be a groove in various shapes, such as arc shape, H shape, U shape, ring shape, etc. The score groove 232 on the wall part 213 may be formed by various processing methods, such as stamping, cold heading, etc. Taking the stamping method to form the score groove 232 as an example, the score groove 232 may be formed by stamping the wall part 213 in the direction from the first surface 2131 to the second surface 2132.

The opening region 23121 is a pressure relief region of the wall part 213. For the battery cell 20, when the internal pressure or temperature of the battery cell 20 reaches the detonation pressure, the opening region 23121 may be opened with the score groove 232 as the boundary to achieve pressure relief. The opening region 23121 may be opened by way of detaching or flipping. The score groove 232 is arranged along the edge of the opening region 23121.

In addition, when forming the score groove 232, stamping or cold heading or other manners may be used, so that the groove wall of the score groove 232 may undergo cold work hardening (the grain arrangement changes, resulting in lattice distortion, which reduces the metal plasticity and increases the material hardness), and its ability to resist external impact is enhanced, and it is not easily damaged by external impact. This helps reduce the risk of leakage from the pressure relief mechanism 23.

Referring to FIG. 3, FIG. 4, FIG. 5, FIG. 6, FIG. 7 and FIG. 8, in some embodiments, the pressure relief mechanism 23 includes at least one stage of depressed groove 231, where the at least one stage of depressed groove 231 is provided on the wall part 213 in sequence in the direction from the first surface 2131 to the second surface 2132. The first groove bottom wall 2312 of the stage of depressed groove 231 farthest away from the first surface 2131 has an opening region 23121.

The wall part 213 may be provided with one stage of depressed groove 231 or a plurality of stages of depressed grooves 231. If a plurality of stages of depressed grooves 231 are provided on the wall part 213, the plurality of stages of depressed grooves 231 are sequentially provided on the wall part 213 in the direction from the first surface 2131 to the second surface 2132, and the profiles of bottom surfaces of the individual stages of depressed grooves 231 are gradually reduced. The depressed groove 231 may be in various shapes, such as rectangle, circle, etc. The depressed groove 231 on the wall part 213 may be formed by various processing methods, such as stamping, cold heading, etc.

For example, as shown in FIG. 8, the wall part 213 is provided with a score groove 232 and two stages of depressed grooves 231, and the score groove 232 and the depressed grooves 231 are all formed by stamping, where the first stage of depressed groove 231 may be formed by stamping the first surface 2131 first, and then the second stage of depressed groove 231 may be formed by stamping the bottom surface of the first stage of depressed groove 231, and finally the score groove 232 may be formed by stamping the bottom surface of the second stage of depressed groove 231.

The at least one stage of depressed groove 231 and the score groove 232 are sequentially provided on the wall part 213 in the direction from the first surface 2131 to the second surface 2132. During forming, all the depressed grooves 231 may be first formed on the wall part 213 in the direction from the first surface 2131 to the second surface 2132, and then the score groove 232 may be formed. The score groove 232 is provided at the bottom surface of the stage of depressed groove 231 farthest away from the first surface 2131. If only one stage of depressed groove 231 is provided in the wall part 213, the stage of depressed groove 231 is the stage of depressed groove 231 closest to the first surface 2131 and also the stage of depressed groove 231 farthest away from the first surface 2131.

The first groove bottom wall 2312 of the first stage of depressed groove 231 farthest away from the first surface 2131 is the portion of the wall part 213 below the bottom surface of the stage of depressed groove 231 farthest away from the first surface 2131. After the stage of depressed groove 231 farthest away from the first surface 2131 of formed on the wall part 213, the remaining portion of the region of the wall part 213 provided with the stage of depressed groove 231 is the first groove bottom wall 2312 of the stage of depressed groove 231 farthest away from the first surface 2131. As shown in FIG. 8, taking the example of the wall part 213 being provided with two stages of depressed grooves 231, the portion of the wall part 213 below the bottom surface of the second stage of depressed groove 231 is the first groove bottom wall 2312 of the stage of depressed groove 231 farthest away from the first surface 2131.

The opening region 3121 is formed at the first groove bottom wall 2312 of the stage of depressed groove 231 farthest away from the first surface 2131.

The at least one stage of depressed groove 231 and the score groove 232 are sequentially provided on the wall part 213 in the direction from the first surface 2131 to the second surface 2132. During forming, the depressed groove 231 and the score groove 232 may be formed stage by stage, thereby reducing the forming force that the wall part 213 suffers and reducing the risk of cracks being generated on the wall part 213. The pressure relief mechanism 23 is not prone to failure due to cracks generated at the position of the score groove 232, thereby improving the long-term reliability of the pressure relief device. When forming the at least one stage of depressed groove 231 and the score groove 232, stamping or cold heading or other manners may be used, so that the groove walls of the depressed groove 231 and the score groove 232 may undergo cold work hardening (the grain arrangement changes, resulting in lattice distortion, which reduces the metal plasticity and increases the material hardness), and its ability to resist external impact is enhanced, and it is not easily damaged by external impact. This helps reduce the risk of leakage from the pressure relief mechanism 23.

Since the score groove 232 is disposed along the edge of the opening region 23121, and the opening region 23121 may be opened with the score groove 232 as a boundary, the pressure relief area of the wall part 213 is increased, and the pressure relief rate of the wall part 213 is increased. In addition, since the first groove bottom wall 2312 of the stage of depressed groove 231 farthest away from the first surface 2131 has an opening region 23121, the depressed groove 231 can provide an avoidance space for the opening region 23121 during the opening process. Even if the first surface 2131 is blocked by an obstacle, the opening region 23121 may still be opened to release pressure.

Referring to FIG. 3, FIG. 4, FIG. 5, FIG. 6, FIG. 7 and FIG. 8, in some embodiments, the pressure relief mechanism 23 includes two stages of depressed grooves 231, where the two stages of depressed grooves 231 are provided in sequence in the direction from the first surface 2131 to the second surface 2132, where the one stage of depressed groove 231 is provided on the first surface 2131, the other stage of depressed groove 231 is provided on the bottom surface of the one stage of depressed groove 231, and the score groove 232 is provided on the bottom surface of the other stage of depressed groove 231.

Two stages of depressed grooves 231 are provided, the forming steps are fewer, and the forming is relatively simple. At the same time, due to cold working hardening, the rigidity, strength and hardness of the wall surface of the score groove 232 can be more effectively improved, and the risk of leakage of the pressure relief mechanism 23 can be effectively reduced, which is conducive to improving production efficiency and reducing production costs.

In some embodiments, the pressure relief mechanism 23 includes a plurality of stages of score grooves 232, and the plurality of stages of score grooves 232 are provided in sequence in the direction from the first surface 2131 to the second surface 2132. In adjacent two stages of depressed grooves 232, one stage of depressed groove 232 away from the first surface 2131 is provided on the bottom surface of the stage of depressed groove 232 close to the first surface 2131.

In the case where the wall part 213 is provided with the depressed grooves 231, the stage of score groove 232 closest to the first surface 2131 is provided on the bottom surface of the stage of depressed grooves 231 farthest away from the first surface 2131.

In the case where the wall part 213 is provided with the depressed grooves 231, the wall part 213 may be provided with two, three, four, five, etc. of stages of score grooves 232. Taking the wall part 213 being provided with two stages of score grooves 232 and two stages of depressed grooves 231 as an example, the first stage of depressed groove 231 (the outermost stage of depressed groove 231) is provided on the first surface 2131, the second stage of depressed groove 231 (the stage of depressed groove 231 farthest away from the first surface 2131) is provided on the bottom surface of the first stage of depressed groove 231, the first stage of score groove 232 (the stage of score groove 232 closest to the first surface 2131) is provided on the bottom surface of the second stage of depressed groove 231, and the second stage of score groove 232 (the stage of score groove 232 farthest away from the first surface 2131) is provided on the bottom surface of the first stage of score groove 232.

When the wall part 213 is provided with a plurality of stages of scored grooves 232, the shapes of the individual stages of score grooves 232 are substantially the same and are all provided along the edge of the opening region 23121.

The plurality of stages of score grooves 232 are provided in sequence in the direction from the first surface 2131 to the second surface 2132, which can reduce the forming depth of each stage of the score groove 232, so as to reduce the forming force that the wall part 213 suffers during forming of each stage of the score groove 232 and reduce the risk of cracks being generated on the wall part 213. In the process of machining the plurality of stages of score grooves 232 stage by stage in the direction from the first surface 2131 to the second surface 2132, the hardness of the residual portion of the region of the wall part 213 where the score grooves 232 are provided increases along with each machining of one stage of score groove, thereby improving the hardness of the residual portion of the wall part 213 after the plurality of stages of score grooves 232 are provided, enabling better long-term reliability, better impact resistance, and reduced probability of damage by external force impact.

Referring to FIG. 6, FIG. 7 and FIG. 8, in some embodiments, in the thickness direction, the surface of the opening region 23121 away from the first surface 2131 is flush with the second surface 2132.

"In the thickness direction, the surface of the opening region 23121 away from the first surface 2131 is flush with the second surface 2132" may also be understood as that in the thickness direction, the opening region 23121 does not protrude from the second surface 2132.

By making the surface of the opening region 23121 away from the first surface 2131 in the thickness direction flush with the second surface 2132, the opening region 23121 occupies reduced internal space of the battery cell 20 or occupies reduced internal space of the battery 100, which is beneficial to improving the energy density of the battery 100.

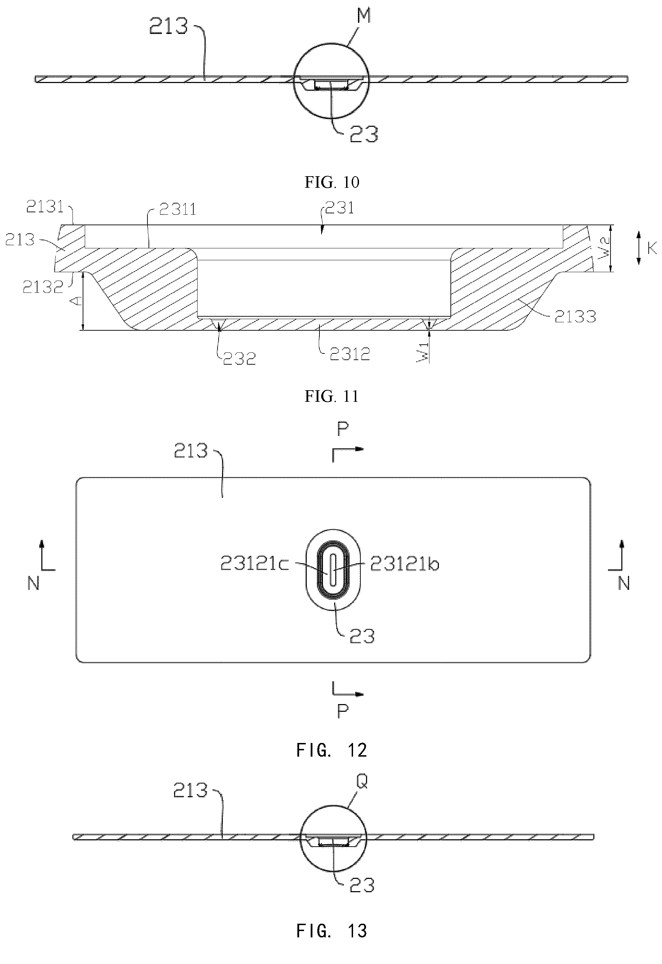

Referring to FIG. 9, FIG. 10 and FIG. 11, FIG. 9 is a schematic top view of a wall part 213 provided by other embodiments of the present application. FIG. 10 is a sectional view of the L-L position in FIG. 9. FIG. 11 is an enlarged view of part M of FIG. 10. In other embodiments, the wall part 213 partially protrudes from the second surface 2132 in a direction away from the first surface 2131 to form a reinforcement part 2133. The reinforcement part 2133 is provided surrounding the periphery of the opening region 23121.

The reinforcement part 2133 is in an annular structure protruding from the second surface 2132. The reinforcement part 2133 may be a protrusion protruding from the second surface 2132, formed by making the wall part 213 partially protrude in the direction from the first surface 2131 to the second surface 2132 when forming the depressed groove 231 by stamping the wall part 213. The stage of depressed groove 231 farthest away from the first surface 2131 is located in the reinforcement part 2133, that is, the bottom surface of the stage of depressed groove 231 farthest away from the first surface 2131 is farther away from the first surface 2131 than the second surface 2132, so that the reinforcement part 2133 is provided surrounding the stage of depressed groove 231 farthest away from the first surface 2131.

The wall part 213 partially protrudes from the second surface 2132 in a direction away from the first surface 2131 to form a reinforcement part 2133, so that when the wall part 213 is deformed, the reinforcement part 2133 can reduce the influence of the deformation on the score groove 232, thereby reducing the risk of leakage of the pressure relief mechanism 23.

In some embodiments, in the thickness direction, the surface of the opening region 23121 away from the first surface 2131 is flush with the surface of the reinforcement part 2133 away from the first surface 2131.

"In the thickness direction, the surface of the opening region 23121 away from the first surface 2131 is flush with the surface of the reinforcement part 2133 away from the first surface 2131" is that in the thickness direction, the distance between the surface of the opening region 23121 away from the first surface 2131 and the first surface 2131 is equal to the distance between the surface of the reinforcement part 2133 away from the first surface 2131 and the first surface 2131. The opening region 23121 does not protrude from the surface of the reinforcement portion 2133 away from the first surface 2131.

In the thickness direction, the opening region 23121 does not protrude from the surface of the reinforcement part 2133 away from the first surface 2131, and in this way, the opening region 23121 occupies reduced internal space of the battery cell 20 or occupies reduced internal space of the battery 100, which is beneficial to improving the energy density of the battery 100.

Referring to FIG. 9, FIG. 10 and FIG. 11, in some embodiments, in the thickness direction, the height of the reinforcement part 2133 protruding from the second surface 2132 is A, which satisfies: 0.5 mm≤A≤4 mm.

In the thickness direction, the height of the reinforcement part 2133 protruding from the second surface 2132 is the distance between the second surface 2132 and the surface of the reinforcement part 2133 away from the first surface 2131.

In the thickness direction, the height of the reinforcement part 2133 protruding from the second surface 2132 may be: A=0.5mm, 0.8mm, 1mm, 1.2mm, 1.5mm, 1.8mm, 2mm, 2.2mm, 2.5mm, 2.8mm, 3mm, 3.2mm, 3.5mm, 3.8mm, 4mm, etc.

The height of the reinforcement part 2133 protruding from the second surface 2132 in the thickness direction is limited to between 0.5 mm and 4 mm, which not only can make the reinforcement part 2133 have a better reinforcing effect, but also does not occupy too much internal space of the battery cell 20 or the battery 100, and can better ensure the energy density of the battery 100. When A<0.5mm, the height of the reinforcement part 2133 protruding from the second surface 2132 in the thickness direction is small, and the reinforcing effect is not obvious. When A> 4mm, the height of the reinforcement part 2133 protruding from the second surface 2132 in the thickness direction is large, occupying a large space and affecting the energy density of the battery 100.

In some embodiments, 1mm≤A≤2.5mm.

In the thickness direction, the height of the reinforcement part 2133 protruding from the second surface 2132 may be: A= 1mm, 1.1mm, 1.2mm, 1.3mm, 1.4mm, 1.5mm, 1.6mm, 1.7mm, 1.8mm, 1.9mm, 2mm, 2.1mm, 2.2mm, 2.3mm, 2.4mm, 2.5mm, etc.

The height of the reinforcement part 2133 protruding from the second surface 2132 in the thickness direction is limited to between 1 mm and 2.5 mm, which can improve the reinforcing effect of the reinforcement part 2133, and occupy small internal space of the battery cell 20 or the battery 100.

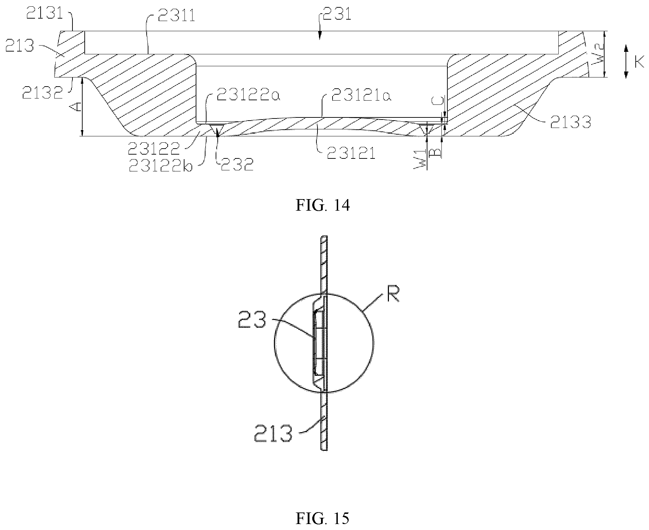

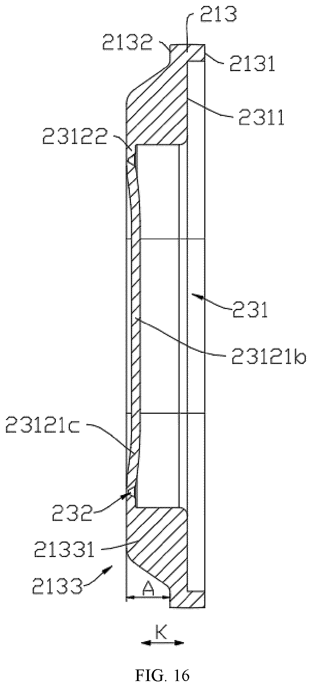

Referring to FIG. 12, FIG. 13, FIG. 14, FIG. 15 and FIG. 16, FIG. 12 is a schematic top view of a wall part 213 provided by yet some embodiments of the present application. FIG. 13 is a sectional view of the N-N position in FIG. 12. FIG. 14 is an enlarged view of part Q of FIG. 13. FIG. 15 is a sectional view of the P-P position in FIG. 12. FIG. 16 is an enlarged view of part R of FIG. 15. In some embodiments, the opening region 23121 is provided bending in the thickness direction.

In some embodiments, the opening region 23121 includes a straight region 23121b and a connecting region 23121c. In the thickness direction, there is a height difference between the straight region 23121b and the open end of the score groove 232. The connecting region 23121c connects the groove wall of the score groove 232 and the straight region 23121b. Optionally, the straight region 23121b is located in the middle of the opening region 23121, and the connecting region 23121c is provided surrounding the straight region 23121b. The cross section of the connecting region 23121c extends in an arc trajectory, so that the opening region 23121 is bent in the thickness direction.

In some other embodiments, the opening region 23121 is of an arch structure.

By making the opening region 23121 bend in the thickness direction, when the wall part 213 is subjected to external impact, the wall part 213 may deforms in the bending direction, thereby absorbing the energy of the external impact, so as to reduce the influence of the external impact on the portion where the score groove 232 is located, and to a certain extent avoid the portion where the score groove 232 is located from being damaged due to external impact. In addition, the bending opening region 23121 is similar to a stress concentration region during pressure relief, making the first groove bottom wall 2312 easier to be opened at the position of the score groove 232. Under the same detonation pressure, the depth of the score groove 232 may be smaller and the thickness of the first groove bottom wall 2312 at the position of the score groove 232 may be greater, so that the first groove bottom wall 2312 is not easy to be opened by external interference at the position of the score groove 232, thereby reducing the risk of leakage of the pressure relief mechanism 23.

Referring to FIG. 12, FIG. 13, FIG. 14, FIG. 15 and FIG. 16, in some embodiments, the opening region 23121 bends in the direction from the second surface 2132 to the first surface 2131.

The opening region 23121 bends in the direction from the second surface 2132 to the first surface 2131, so that the opening region 23121 does not extend beyond the surface of the reinforcement part 2133 away from the first surface 2131 in the thickness direction. Alternatively, the opening region 23121 bends in the direction from the second surface 2132 to the first surface 2131, and the bottom surface of the depressed groove 231 may form a protrusion in the direction from the second surface 2132 to the first surface 2131.

In the embodiment where the opening region 23121 includes the straight region 23121b and the connecting region 23121c, the straight region 23121b is located on one side of the score groove 232 in the direction from the second surface 2132 to the first surface 2131.

In the embodiment where the opening region 23121 is in an arch structure, the vault of the opening region 23121 is located on one side of the score groove 232 in the direction from the second surface 2132 to the first surface 2131.

When the opening region 23121 bends in the direction from the second surface 2132 to the first surface 2131, the gas inside the battery cell 20 may generate, when acting on the opening region 23121, a pulling force on the first groove bottom wall 2312 at the position of the score groove 232, so that the first groove bottom wall 2312 is easy to be opened at the position of the score groove 232, and under the same detonation pressure, the depth of the score groove 232 may be smaller and the thickness of the first groove bottom wall 2312 at the position of the score groove 232 may be greater, so that the first groove bottom wall 2312 is not easy to be opened by external interference at the position of the score groove 232, thereby reducing the risk of leakage of the pressure relief mechanism 23. When the electrolytic solution acts on the opening region 23121, the acting force is relatively small. Although a pulling force is generated on the first groove bottom wall 2312 at the position of the score groove 232, it is not enough to cause the score groove 232 to be opened. In addition, the pulling force generated on the first groove bottom wall 2312 at the position of the score groove 232 disperses the acting force of the electrolytic solution, making the amplitude of the opening region 23121 reduced, and enabling the pressure relief mechanism 23 to be not easy to open under the action of the electrolytic solution, thereby reducing the risk of leakage of the pressure relief mechanism 23.

Referring to FIG. 12, FIG. 13, FIG. 14, FIG. 15 and FIG. 16, in some embodiments, the pressure relief mechanism 23 includes at least one stage of depressed groove 231, where the at least one stage of depressed groove 231 is provided on the wall part 213 in sequence in the direction from the first surface 2131 to the second surface 2132, and the first groove bottom wall 2312 of the stage of depressed groove 231 farthest away from the first surface 2131 has an opening region 23121. **The** first groove bottom wall 2312 includes a main body region 23122. **The** main body region 23122 is provided surrounding the opening region 23121. **The** score groove 232 is provided between the opening region 23121 and the main body region 23122. **In** the thickness direction, the main body region 23122 has a third surface 23122a and a fourth surface 23122b, and the distance between the third surface 23122a and the fourth surface 23122b is B. **The** opening region 23121 has a fifth surface 23121a away from the second surface 2132. **The** third surface 23122a and the fifth surface 23121a are located on the same side of the first groove bottom wall 2312. **The** maximum distance between the third surface 23122a and the fifth surface 23121a is C, satisfying: B/10≤C≤B.

When the battery cell 20 releases the pressure, the first groove bottom wall 2312 is opened at the position where the opening region 23121 is located, and the position of the main body region 23122 remains unchanged. **The** main body region 23122 has a third surface 23122a and a fourth surface 23122b in the thickness direction, where the third surface 23122a is close to the first surface 2131 in the thickness direction, and the fourth surface 23122b is away from the first surface 2131 in the thickness direction.

B represents the distance between the third surface 23122a and the fourth surface 23122b in the thickness direction, that is, the thickness of the main body region 23122.

The opening region 23121 has a fifth surface 23121a facing the first surface 2131. The third surface 23122a and the fifth surface 23121a are located on the same side of the first groove bottom wall 2312.

C represents the maximum distance between the third surface 23122a and the fifth surface 23121a in the thickness direction.

The distance between the third surface 23122a and the fourth surface 23122b in the thickness direction is 1 to 10 times the maximum distance between the third surface 23122a and the fifth surface 23121a in the thickness direction, thus reflecting the bending degree of the opening region 23121. When C>B, it means that the bending degree of the opening region 23121 is too large, and it is easy to be affected by external impact, causing the first groove bottom wall 2312 to crack at the position of the score groove 232. If C<B/10, it means that the bending degree of the opening region 23121 is too small, which affects the release of stress inside the score groove 232.

In some embodiments, the first surface 2131 is the outer surface of the wall part 213.

"The first surface 2131 is the outer surface of the wall part 213" also means that the first surface 2131 is the surface of the wall part 213 away from the electrode assembly 22. Correspondingly, the second surface 2132 is the inner surface of the wall part 213, and the second surface 2132 faces the electrode assembly 22.

When the first surface 2131 is the outer surface of the wall part 213, the position of the first groove bottom wall 2312 is away from the first surface 2131 in the thickness direction, so that the score groove 232 provided on the first groove bottom wall 2312 is not easily affected by external impact, and the pressure relief mechanism 23 is not easily opened due to external impact, thereby reducing the risk of leakage of the pressure relief mechanism 23.

In some embodiments, the pressure relief mechanism 23 includes at least one stage of depressed groove 231, where the at least one stage of depressed groove 231 is provided on the wall part 213 in sequence in the direction from the first surface 2131 to the second surface 2132, and the first groove bottom wall 2312 of the stage of depressed groove 231 farthest away from the first surface 2131 has an opening region 23121. The strength of the wall part 213 is D₁, the strength of the second groove bottom wall 2311 of the stage of depressed groove 231 closest to the first surface 2131 is D₂, and the strength of the first groove bottom wall 2312 at the position of the score groove 232 is D₃, satisfying: D₃>D₂≥D₁. And/or the hardness of the wall part 213 is E₁, the hardness strength of the second groove bottom wall 2311 is E₂, and the hardness of the first groove bottom wall 2312 at the position of the score groove 232 is E₃, satisfying: E₃>E₂≥E₁. And/or the rigidity of the wall part 213 is F₁, the rigidity of the second groove bottom wall 2311 is F₂, and the rigidity of the first groove bottom wall 2312 at the position of the score groove 232 is F₃, satisfying: F₃>F₂≥F₁.

If the wall part 213 is provided with only one stage of depressed groove 231, the stage of depressed groove 231 closest to the first surface 2131 is also the stage of depressed groove 231 farthest away from the first surface 2131. That is, the first groove bottom surface 2312 and the second groove bottom surface 2311 are the same groove bottom wall. When two or more stages of depressed grooves 231 are provided on the wall part 213, the first groove bottom wall 2312 and the second groove bottom wall 2311 are different groove bottom walls.

The strength and/or hardness and/or rigidity of the first groove bottom wall 2312 at the position of the score groove 232 is greater than the strength and/or hardness and/or rigidity of the second groove bottom wall 2311. The strength and/or hardness and/or rigidity of the second groove bottom wall 2311 is greater than or equal to the strength and/or hardness and/or rigidity of the wall part 213.

When the strength of the second groove bottom wall 2311 is greater than the strength of the wall part 213, it is equivalent to providing a reinforcement member around the score groove 232, so that when the wall part 213 is subjected to external impact, the risk of damage to the first groove bottom wall 2312 at the position of the score groove 232 is reduced, and the pressure relief mechanism 23 has better tolerance to external impact. In addition, although the strength of the first groove bottom wall 2312 is higher at the position of the score groove 232, its hardness is also higher, and the ductility of the material decreases (the material becomes brittle), so it is also easy to open the valve under the action of the internal gas. In this way, under the same detonation pressure, the thickness of the first groove bottom wall 2312 at the position of the score groove 232 can be larger to enhance the resistance to external impact, so that the pressure relief mechanism 23 has better long-term reliability. When forming the depressed groove 231 and the score groove 232, stamping or cold heading or other manners may be used, so that the groove walls of the depressed groove 231 and the score groove 232 may be cold-work hardened, so that the strength, rigidity and hardness of the second groove bottom wall 2311 and the first groove bottom wall 2312 at the position of the score groove 232 are correspondingly improved.

In some embodiments, 1.2E₁≤E₂≤2.5E₁.

The ratio of the hardness of the second groove bottom wall 2311 to the hardness of the wall part 213 may be: E₂/E₁=1.2, 1.3, 1.4, 1.5, 1.6, 1.7, 1.8, 1.9, 2, 2.1, 2.2, 2.3, 2.4, 2.5, etc.

The hardness of the second groove bottom wall 2311 is 1.2 to 2.5 times the hardness of the wall part 213, so that the second groove bottom wall 2311 can block external objects and reduce the risk of external objects acting at the position of the score groove 232.

In some embodiments, 2.5E₁<E₃≤5E₁.

The ratio of the hardness of the first groove bottom wall 2312 at the position of the score groove 232 to the hardness of the wall part 213 may be: E₃/E₁=2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, etc.

The hardness of the first groove bottom wall 2312 at the position of the score groove 232 is 2.5 to 5 (not including 2.5) times the hardness of the wall part 213, making the first groove bottom wall 2312 more brittle at the position of the score groove 232 and easily opened under the action of internal pressure.

In some embodiments, 5HBW≤E₁≤150HBW.

E₁ may be a point value of any one of 5HBW, 8HBW, 9 HBW, 9.5 HBW, 10HBW, 12HBW, 13HBW, 15HBW, 16 HBW, 19HBW, 20HBW, 30HBW, 40 HBW, 50HBW, 52HBW, 52.5HBW, 53HBW, 60 HBW, 70HBW, 80HBW, 90HBW, 100HBW, 110HBW, 120HBW, 130HBW, 140HBW, and 150HBW, or a range value between any two of them.

When the strength of the wall part 213 is 5 -150 HBW, the wall part 213 has a strong impact resistance and good tolerance to external impact.

In some embodiments, 5HBW≤E₃≤200HBW.

E₃ may be a point value of any one of 5HBW, 6 HBW, 8HBW, 10HBW, 15HBW, 19HBW, 20HBW, 22.8HBW, 30HBW, 32HBW, 40HBW, 50HBW, 60 HBW, 70HBW, 80HBW, 90HBW, 100HBW, 110HBW, 120HBW, 130HBW, 140HBW, 150HBW, 160HBW, 170HBW, 180HBW, 190HBW, and 200HBW, or a range value between any two of them.

When the strength of the first groove bottom wall 2312 is 5-2000 HBW at the position of the score groove 232, even if the wall part 213 is subjected to external impact, the first groove bottom wall 2312 is not easily damaged at the position of the score groove 232, and the pressure relief mechanism 23 has better tolerance to external impact.

In some embodiments, the minimum thickness of the first groove bottom wall 2312 at the position of the score groove 232 is W₁, satisfying: 5HBW/mm≤E₃/W₁≤10000HBW/mm; preferably, 190HBW/mm≤E₃/W₁≤4000HBW/mm.

E₃/W₁ may be a point value of any one of 5HBW/mm, 6HBW/mm, 7HBW/mm, 20HBW/mm, 31HBW/mm, 32HBW/mm, 37.5HBW/mm, 42HBW/mm, 43HBW/mm, 50HBW/mm, 60HBW/mm, 61HBW/mm, 62HBW/mm, 63HBW/mm, 64HBW/mm, 75HBW/mm, 90HBW/mm, 100HBW/mm, 120 HBW/mm, 150HBW/mm, 190HBW/mm, 500HBW/mm, 1000HBW/mm, 1200HBW /mm, 1750HBW/mm, 1800HBW/mm, 2100 HBW/mm, 4000HBW/mm, 5000 HBW/mm, 8000HBW/mm, 9000 HBW/mm and 10000HBW/mm, or a range value between any two of them.

The hardness of the first groove bottom wall 2312 at the position of the score groove 232 is Brinell hardness, with the unit of HBW. The measurement method of Brinell hardness may be implemented according to the measurement principle in GB/T 23.1-2018. In the actual measurement process, the hardness of the first groove bottom wall 2312 at the position of the score groove 232 may be obtained by performing measurement on two surfaces in the thickness direction. Taking the wall part 213 being the end cover 211 of the battery cell 20 as an example, the hardness of the first groove bottom wall 2312 at the position of the score groove 232 may be measured on the surface of the first groove bottom wall 2312 at the position where the score groove 232, with the surface facing away from the interior of the battery cell 20, or the hardness of the first groove bottom wall 2312 at the position of the score groove 232 may also be measured on the surface of the first groove bottom wall 2312 at the position of the score groove 232, with the surface facing the interior of the battery cell 20.

When E₃/W₁ >10000HBW/mm, the first groove bottom wall 2312 is thinner and harder at the position of the score groove 232, which causes the first groove bottom wall 2312 to be very thin and brittle at the position of the score groove 232. The first groove bottom wall 2312 is easily damaged at the position of the score groove 232, under normal use conditions of the battery cell 20, and the service life of the battery cell 20 is short. When E₃/W₁<5HBW/mm, the first groove bottom wall 2312 is thicker and has lower hardness at the position of the score groove 232. When the battery cell 20 undergoes thermal runaway, the first groove bottom wall 2312 may be stretched and extended at the position of the score groove 232, and the timeliness of pressure relief is poor.

Not only the influence of the thickness of the first groove bottom wall 2312 at the position of the score groove 232 on the performance of the shell 21 is taken into consideration, but also the influence of the hardness of the first groove bottom wall 2312 at the position of the score groove 232 on the performance of the shell 21 is taken into consideration, 5HBW/mm≤5E3/W₁≤510000 HBW/mm, which can not only ensure that the first groove bottom wall 2312 has sufficient strength at the position of the score groove 232 under normal use conditions of the battery cell 20 and is not easily damaged by fatigue, thereby increasing the service life of the battery cell 20; but also enable the shell 21 to release pressure in time through the opening region 23121 when the battery cell 20 has thermal runaway, thereby reducing the risk of occurrence of explosion of the battery cell 20 and improving the safety of the battery cell 20.

In some embodiments, 190HBW/mm≤E₃/W₁≤4000HBW/mm.

E₃/W₁ may be a point value of any one of 190HBW/mm, 250HBW/mm, 280 HBW/mm, 300HBW/mm, 350HBW/mm, 400HBW/mm, 450HBW/mm, 500HBW/mm, 600HBW/mm, 700HBW/mm, 875HBW/mm, 1000HBW/mm, 1200HBW/mm, 1500HBW/mm, 1750HBW/mm, 1800HBW/mm, 2000HBW/mm, 2100 HBW/mm, 2500HBW/mm, 3000HBW/mm, 3500HBW/mm, and 4000HBW/mm, or a range value between any two of them.

When 190HBW/mm≤E₃/W₁≤4000 HBW/mm, the comprehensive performance of the shell 21 is better, ensuring that in the case where the opening region 23121 can be ensued to be opened in time when the battery cell 20 has thermal runaway, the first groove bottom wall 2312 has sufficient strength at the position of the score groove 232 under normal use conditions of the battery cell 20. Under the premise of ensuring the safety of the battery cells 20, the service life of the battery cells 20 is increased.

Referring to FIG. 12, FIG. 13, FIG. 14, FIG. 15 and FIG. 16, in some embodiments, the minimum thickness of the wall part 213 at the position of the score groove 232 is W₁, and the minimum thickness of the wall part 213 is W₂, satisfying: 0.05≤W₁/W₂≤0.95.

W₁/W₂ may be a point value of any one of 0.05, 0.06, 0.07, 0.08, 0.1, 0.15, 0.2, 0.25, 0.3, 0.35, 0.4, 0.45, 0.5, 0.55, 0.6, 0.65, 0.7, 0.8, 0.85, 0.9 and 0.95, or a range value between any two of them.

The score groove 232 is formed on the wall part 213 by stamping or cold heading, and W₁/W₂ is controlled between 0.05 and 0.95, which can achieve the purpose of refining the grains of the wall part 231 at the position of the score groove 232, improve the material mechanical properties of the wall part 213 at the position of the score groove 232, improve the toughness and anti-fatigue strength of the wall part 213 at the position of the score groove 232, reduce the risk of the wall part 213 at the position of the score groove 232 being damaged during normal use of the battery cell 20, increase the service life of the battery cell 20, and reduce the risk of occurrence of explosion of the battery cell 20 during thermal runaway.

In some embodiments, 0.12≤W₁/W₂≤0.8.

W₁/W₂ may be a point value of any one of 0.12, 0.13, 0.14, 0.15, 0.17, 0.2, 0.22, 0.25, 0.27, 0.3, 0.32, 0.35, 0.37, 0.4, 0.42, 0.45, 0.47, 0.5, 0.52, 0.55, 0.57, 0.6, 0.62, 0.65, 0.66, 0.67, 0.7, 0.72, 0.75, 0.77 and 0.8, or a range value between any two of them.

When 0.12≤W₁/W₂≤0.8, the comprehensive performance of the wall part 213 is better, and the wall part 213 is ensured to have sufficient strength at the position of the score groove 232 during normal use of the battery cell 20, in the case where it is ensured that the wall part 213 can be destroyed in time at the position of the score groove 232 when the battery cell 20 has thermal runaway.

In some embodiments, 0.2≤W₁/W₂≤0.5.

W₁/W₂ may be a point value of any one of 0.2, 0.21, 0.22, 0.23, 0.24, 0.25, 0.26, 0.27, 0.28, 0.29, 0.3, 0.31, 0.32, 0.33, 0.34, 0.35, 0.36, 0.37, 0.38, 0.39, 0.4, 0.41, 0.42, 0.43, 0.44, 0.45, 0.46, 0.47, 0.48, 0.49 and 0.5 or a range value between any two of them.

When 0.2:5W₁/W₂≤0.5, the risk of the wall part 213 being destroyed at the position of the score groove 232 under normal use conditions of the battery cell 20 is further reduced, and it is ensured that the wall part 213 is destroyed in time at the position of the score groove 232 when the battery cell 20 has thermal runaway, thereby improving the timeliness of pressure relief.

In some embodiments, 0.02mm≤W₁≤1.6mm.

W₁ may be a point value of any one of 0.02mm, 0.03mm, 0.04mm, 0.05mm, 0.06mm, 0.1mm, 0.15mm, 0.2mm, 0.25mm, 0.3mm, 0.35 mm, 0.4 mm, 0.45 mm, 0.5 mm, 0.55 mm, 0.6 mm, 0.7 mm, 0.75 mm, 0.8 mm, 0.85 mm, 0.9 mm, 0.95 mm, 1 mm, 1.05 mm, 1.1 mm, 1.15 mm, 1.2 mm, 1.25 mm, 1.3 mm, 1.35 mm, 1.4 mm, 1.42mm, 1.43mm, 1.45 mm, 1.47mm, 1.5 mm, 1.55 mm and 1.6 mm, or a range value between any two of them.

When W₁ <0.02mm, it is difficult to form the score groove 232, and during the forming process, the wall part 213 is easily damaged at the position of the score groove 232. When W₁>1.6 mm, the wall part 231 is more difficult to be destroyed at the position of the score groove 232 during thermal runaway of the battery cell 20, resulting in easy occurrence of situation in which the pressure is not released in time.

Therefore, when 0.02mm≤W₁≤1.6mm, the timeliness of pressure relief of the battery cell 20 during thermal runaway is improved, while reducing the difficulty of forming the score groove 232.

In some embodiments, 0.06mm≤W₁≤0.4mm.

W₁ may be a point value of any one of 0.06mm, 0.07mm, 0.08mm, 0.1mm, 0.15mm, 0.18mm, 0.2mm, 0.24mm, 0.25mm, 0.3mm, 0.35mm and 0.4mm, or a range value between any two of them.

When 0.06mm≤W₁≤0.4mm, the difficulty of forming the score groove 232 is further reduced, and the timeliness of pressure relief of the battery cell 20 during thermal runaway is improved.

In some embodiments, 1mm≤W₂≤5mm.

W₂ may be a point value of any one of 1mm, 2mm, 3mm, 4mm, 5mm, or a range value between any two of them.

When W₂>5mm, the thickness of the wall part 213 is relatively large, more material is used for the shell 21, the weight of the shell 21 is large, and the economy is poor. If W₂ < 1mm, the thickness of the wall part 213 is small and the anti-deformation ability of the shell 21 is poor.

Therefore, when 1mm≤W₂≤5mm, the shell 21 is enabled to be more economical and have better anti-deformation ability.

In some embodiments, 1.2mm≤W₂≤3.5mm.

W₂ may be a point value of any one of 1.2mm, 1.25mm, 1.3mm, 1.4mm, 1.5mm, 1.6mm, 1.7mm, 1.8mm, 1.9mm, 2mm, 2.1mm, 2.2mm, 2.3mm, 2.4mm, 2.5mm, 2.6mm, 2.7mm , 2.8 mm, 2.9 mm, 3 mm, 3.1 mm, 3.2 mm, 3.3 mm, 3.4 mm and 3.5 mm, or a range value between any two of them.

When 1.2mm≤W₂≤3.5mm, the shell 21 is enabled to be more economical and have better anti-deformation ability.

Further, 2mm≤W₂≤3mm.

Referring to FIG. 12, FIG. 13, FIG. 14, FIG. 15 and FIG. 16, in some embodiments, the pressure relief mechanism 23 includes at least one stage of depressed groove 231, where the at least one stage of depressed groove 231 is provided on the wall part 213 in sequence in the direction from the first surface 2131 to the second surface 2132, and the first groove bottom wall 2312 of the stage of depressed groove 231 farthest away from the first surface 2131 has an opening region 23121. The average grain size of the wall part 213 is G₁, the average grain size of the second groove bottom wall 2311 of the stage of depressed groove 231 closest to the first surface 2131 is G₂, and the average grain size of the first groove bottom wall 2312 at the position of the score groove 232 is G₃, satisfying: G₁>G₂> G₃.

The measurement method of average grain size may be found in the intercept point method in GB 6394-2017, which will not be described here. When measuring the average grain size of the first groove bottom wall 2312 at the position of the score groove 232, the measurement may be performed in the thickness direction of the first groove bottom wall 2312 at the position of the score groove 232; and when measuring the average grain size of the wall part 213, the measurement may be performed in the thickness direction of the wall part 213.

For the convenience of measurement, it may also be characterized by the number of grains per unit area. When characterized by the number of grains per unit area, the number of grains per unit area of the wall part 213 is smaller than the number of grains per unit area of the second groove bottom wall 2311, and the number of grains per unit area of the second groove bottom wall 2311 is less than the number of grains per unit area of the first groove bottom wall 2312 at the position of the score groove 232.

When the depressed groove 231 and the score groove 232 are formed by stamping or cold heading or other manners, the grains of the material are broken and become finer. Therefore, the average grain size of the first groove bottom wall 2312 at the position of the score groove 232 is smaller than the average grain size of the second groove bottom wall 2311, and the average grain size of the second groove bottom wall 2311 is smaller than the average grain size of the wall part 213.

In some embodiments, G₃/G₁≤0.9.

G₃/G₁ may be a point value of any one of 0.01, 0.03, 0.04, 0.05, 0.1, 0.15, 0.2, 0.25, 0.3, 0.35, 0.4, 0.45, 0.5, 0.55, 0.6, 0.65, 0.7, 0.75, 0.8, 0.85 and 0.9, or a range value between any two of them.

When G₃/G₁≤0.9, the average grain size of the first groove bottom wall 2312 at the position of the score groove 232 is significantly different from the average grain size of the wall part 213, and the average grain size of the first groove bottom wall 2312 at the position of the score groove 232 is reduced, which can refine the grains of the first groove bottom wall 2312 at the position of the score groove 232, improve the mechanical properties of the material of the first groove bottom wall 2312 at the position of the score groove 232, further improve the toughness and fatigue resistance of the first groove bottom wall 2312 at the position of the score groove 232, reduce the risk of the first groove bottom wall 2312 being damaged at the position of the score groove 232 under normal use conditions of the battery cell 20, and increase the service life of the battery cell 20.

In some embodiments, G₃/G₁≥ 0.05.

The inventors noted that if G₃/G₁ < 0.05, the difficulty of forming the depressed groove 231 and the score groove 232 increases, and the strength of the first groove bottom wall 2312 is too large at the position of the score groove 232, the first groove bottom wall 2312 is more difficult to be destroyed at the position of the score groove 232 during thermal runaway of the battery cell 20, resulting in easy occurrence of situation in which the pressure is not released in time.

Therefore, when G₃/G₁≥0.05, the difficulty of forming the depressed groove 231 and the score groove 232 is reduced, and the timeliness of pressure relief of the battery cell 20 during thermal runaway is reduced.

In some embodiments, 0.1≤G₃/G₁≤0.5.

G₃/W₂ may be a point value of any one of 0.1, 0.12, 0.15, 0.17, 0.2, 0.22, 0.25, 0.27, 0.3, 0.32, 0.35, 0.37, 0.4, 0.42, 0.45, 0.47 and 0.5, or a range value between any two of them.

When 0.1≤G₃/G₁≤0.5, the comprehensive performance of the wall part 213 is better, and the first groove bottom wall 2312 is ensured to have sufficient strength at the position of the score groove 232 during normal use of the battery cell 20 in the case where it is ensured that the first groove bottom wall 2312 can be destroyed in time at the position of the score groove 232 when the battery cell 20 has thermal runaway.

In some embodiments, 0.4µm≤G₃≤75µm.

G₃ may be a point value of any one of 0.4µm, 0.5µm, 1µm, 2µm, 3µm, 4µm, 5µm, 10µm, 15µm, 16µm, 20µm, 25µm, 28µm, 30µm, 35µm, 36µm, 40µm, 45µm, 47.5µm, 48µm, 49µm, 50µm, 55µm, 60µm, 65µm, 70µm, 72µm and 75µm, or a range value between any two of them.

If G₃>75µm, the toughness and anti-fatigue strength of the first groove bottom wall 2312 at the position of the score groove 232 are poor; and if G₃<0.4µm, the depressed groove 231 and the score groove 232 are difficult to form, the strength of the first groove bottom wall 2312 is too large at the position of the score groove 232, and the first groove bottom wall 2312 is more difficult to be destroyed at the position of the score groove 232 during thermal runaway of the battery cell 20, resulting in easy occurrence of situation in which the pressure is not released in time. Therefore, when 0.4µm≤G₃≤75µm, on the one hand, the difficulty of forming the depressed groove 231 and the score groove 232 is reduced, and the timeliness of pressure relief of the battery cell 20 during thermal runaway is improved; and on the other hand, the toughness and anti-fatigue strength of the first groove bottom wall 2312 at the position of the score groove 232 are improved, and the risk of damage to the first groove bottom wall 2312 at the position of the score groove 232 under normal use conditions of the battery cell 20 is reduced.

In some embodiments, 1µm≤G₃≤10µm.

G₃ may be a point value of any one of 1µm, 1.5µm, 1.6µm, 2µm, 2.5µm, 2.6µm, 3µm, 3.3µm, 3.5µm, 3.6µm, 4µm, 4.5µm, 4.6µm, 5µm, 5.5µm, 5.6µm, 6µm, 6.5µm, 6.6µm, 6.7µm, 7µm, 7.5µm, 7.6µm, 8µm, 8.5µm, 8.6µm, 9µm, 9.5µm, 9.6µm and 10µm, or a range value between any two of them.

1µm≤G₃≤10µm, enabling that the comprehensive performance of the wall part 213 is better, and the first groove bottom wall 2312 is ensured to have sufficient strength at the position of the score groove 232 under normal use conditions of the battery cell 20 in the case where it is ensured that the first groove bottom wall 2312 can be destroyed in time at the position of the score groove 232 when the battery cell 20 has thermal runaway.

In some embodiments, 10µm≤G₁≤150µm.

G₁ may be a point value of any one of 10µm, 13µm, 14µm, 15µm, 20µm, 25µm, 30µm, 32µm, 35µm, 40µm, 45µm, 50µm, 55µm, 60µm, 65µm, 70µm, 75µm, 80µm, 85µm, 90µm, 95µm, 100µm, 105µm, 110µm, 115µm, 120µm, 125µm, 130µm, 135µm, 140µm, 145µm and 150µm, or a range value between any two of them.

In some embodiments, 30µm≤G₁≤100µm.

G₁ may be a point value of any one of 30µm, 32µm, 35µm, 37µm, 40µm, 42µm, 45µm, 47µm, 50µm, 52µm, 55µm, 57µm, 60µm, 62µm, 65µm, 67µm, 70µm, 72µm, 75µm, 77µm, 80µm, 82µm, 85µm, 87µm m, 90µm, 92µm, 95µm, 97µm and 100µm, or a range value between any two of them.

In some embodiments, the minimum thickness of the first groove bottom wall 2312 at the position of the score groove 232 is W₁, and the average grain size of the first groove bottom wall 2312 at the position of the score groove 232 is G₃, satisfying: 1≤W₁/G₃≤100.

If W₁/G₃<1, in the thickness direction of the wall part 213, the fewer the number of grain layers of the first groove bottom wall 2312 at the position of the score groove 232, the smaller the anti-fatigue strength of the first groove bottom wall 2312 at the position of the score groove 232; and if W₁/G₃>100, in the thickness direction, the number of grain layers of the first groove bottom wall 2312 at the position of the score groove 232 is too large, and the strength of the first groove bottom wall 2312 at the position of the score groove 232 is too large, which easily lead to the risk that the first groove bottom wall 2312 cannot be destroyed in time at the position of the score groove 232 during thermal runaway of the battery cell 20. Therefore, when 1≤W₁/G₃≤100, on the one hand, the first groove bottom wall 2312 is enabled to have more grain layers in the thickness direction at the position of the score groove 232, improving the anti-fatigue strength of the first groove bottom wall 2312 at the position of the score groove 232 and reducing the risk of damage to the first groove bottom wall 2312 at the position of the score groove 232 under normal use conditions of the battery cell 20; and on the other hand, the first groove bottom wall 2312 is enabled to be damaged more in time at the position of the score groove 232 when the battery cell 20 is in thermal runaway, thereby achieving timely pressure relief.

In some embodiments, 5≤W₁/G₃≤20.

W₁/G₃ may be a point value of any one of 5, 5.5, 6, 6.5, 7, 7.5, 8, 8.4, 8.5, 8.8, 8.9, 9, 9.5, 9.6, 10, 10.5, 11, 11.4, 11.5, 12, 12.5, 13, 13.5, 14, 14.5, 15, 15.5, 16, 16.5, 17, 17.5, 18, 18.5, 19, 19.5 and 20 or a range value between any two of them.

When 5≤W₁/G₃≤20, the comprehensive performance of the wall part 213 is better, and the first groove bottom wall 2312 is ensured to have sufficient anti-fatigue strength at the position of the score groove 232 during normal use of the battery cell 20 in the case where it is ensured that the first groove bottom wall 2312 can be destroyed in time at the position of the score groove 232 when the battery cell 20 has thermal runaway, increasing the service life of the battery cell 20.

In some embodiments, the shell 21 includes a casing 212 and an end cover 211. The casing 212 has an opening. The end cover 211 is connected to the casing 212 and seals the opening. The pressure relief mechanism 23 is provided at the end cover 211.

The pressure relief mechanism 23 is provided on the end cover 211, and the end cover 211 is located at the lower portion of the shell 212, corresponding to the scenario where the battery cell 20 is inverted.

In some embodiments, the shell 21 includes a casing 212 and an end cover 211. The casing 212 has an opening. The end cover 211 is connected to the casing 212 and seals the opening. The pressure relief mechanism 23 is provided at the casing 212.

The pressure relief mechanism 23 is provided on the shell 212, and the pressure relief mechanism 23 is located at the lower portion of the shell 212.

In some embodiments, in the first direction, two ends of the shell 212 are each provided with an opening, the shell 21 includes two end covers 211, and each of the end covers 211 seals one corresponding opening.

The features and performances of the present application will be described in further detail below with reference to the examples.

In various examples and comparative examples, the battery cell 20 is a square battery cell 20, the end cover 211 in the battery cell 20 serves as the wall part 213, the capacity of the battery cell 20 is 150Ah, and the chemical system is NCM.

### I. Test Method

(1) Test for the minimum thickness of the first groove bottom wall 2312 at the position of the score groove 232, and the wall part 213.
   The wall part 213 is cut into three sections, and the middle section is taken as a sample. The cross sections at two ends of the sample are the position of the first groove bottom wall 2312 where the score groove 232 is and the position of the wall part 213 where the depressed groove 231 is not provided. The cutting direction is perpendicular to the length direction of the opening region 23121. After the middle section is polished to fully remove burrs, the sample is placed on a three-dimensional coordinate measuring machine to measure the thickness of the first groove bottom wall 2312 at the position of the score groove 232 and the thickness of the wall part 213, on the cross section.
(2) Test for the average grain size of the first groove bottom wall 2312 at the position of the score groove 232, and the wall part 213.
   The average grain sizes of the first groove bottom wall 2312 at the position of the score groove 232 and of the wall part 213 are tested using an electron backscatter diffraction (EBSD) method. The wall part 213 is cut into sections, and the middle section is taken as a sample. The cross sections at two ends of the sample are the position of the first groove bottom wall 2312 where the score groove 232 is and the position of the wall part 213 where the depressed groove 231 is not provided. The cutting direction is perpendicular to the length direction of the opening region 23121, and the cutting device does not change the grain structure. Then, after the sample is electropolished, the sample is fixed on a sample table tilted at 70°. The appropriate magnification is selected, and a scanning electron microscope (SEM) equipped with an electron backscatter diffraction (EBSD) accessory is used to perform EBSD scanning. Based on the scanning results, the average grain size (i.e., the equal-area circle diameter of the complete grains in the inspection surface) is finally calculated.
(3) Test for the hardness of the first groove bottom wall 2312 at the position of the score groove 232, and the wall part 213.
   The wall part 213 is cut into sections, and the middle section is taken as a sample. The cross sections at two ends of the sample are the position of the first groove bottom wall 2312 where the score groove 232 is and the position of the wall part 213 where the depressed groove 231 is not provided. The cutting direction is perpendicular to the length direction of the opening region 23121. After the test section is polished to fully remove burrs, the sample is placed horizontally (the direction of the sample section is parallel to the compression direction of the hardness tester) on the Brinell hardness tester for hardness measurement. If the width size of the first groove bottom wall 2312 at the position of the score groove 232 is <1mm or the compression head size of the Brinell hardness tester is much larger than the width of the first groove bottom wall 2312 at the position of the score groove 232, a non-standard compression head should be processed for hardness measurement according to the Brinell hardness measurement and conversion principle.
(4) Cracking rate of the first groove bottom wall 2312 at the position of the score groove 232 under normal use conditions of the battery cell 20.
   The battery cell 20 is placed at 25±2°C and subjected to cyclic charging and discharging in a charge and discharge interval of 5%-97% SOC. The pressure of generated gas inside the battery cell 20 is monitored and 500 sets of tests are performed simultaneously. The test end condition is that: the life of the battery cell 20 decreases to 80% SOH or the first groove bottom wall 2312 of any group of battery cells 20 is cracked at the position of the score groove 232 during the cycle process. In the above, the condition for determining whether the first groove bottom wall 2312 is cracked at the position of the score groove 232 is that: the gas pressure value inside the battery cell 20 decreases, and the decrease value is greater than 10% of the maximum gas pressure. The cracking rate of the first groove bottom wall 2312 at the position of the score groove 232 is calculated, the cracking rate = number of cracks/total number*100%.
(5) The explosion rate of the battery cell 20 during thermal runaway.

A small heating film is built into the battery cell 20. The heating film is energized to heat the battery cell 20 until thermal runaway occurs in the battery cell 20. Then, whether the battery cell 20 explodes is observed. The test was repeated for 500 times, and the explosion rate of the battery cells 20 was calculated, the explosion rate = number of explosion/total number*100%.

### II. Test Result

In various examples and comparative examples, the test results of the minimum thickness W₁ of the first groove bottom wall 2312 at the position of the score groove 232, the minimum thickness W₂ of the wall part 213, the average grain size G₃ of the first groove bottom wall 2312 at the position of the score groove 232, the average grain size G₁ of the wall part 213, the hardness E₃ of the first groove bottom wall 2312 at the position of the score groove 232, and the hardness E₁ of the wall part 213 are shown in Table 1. In Table 1, the units of W₁ and W₂ are mm, the units of G₃ and G₁ are mm, and the units of E₃ and E₁ are HBW, and the cracking rate Q1 of the first groove bottom wall 2312 at the position of the score groove 232 under normal use conditions of the battery cell 20 and the explosion rate Q2 of the battery cell 20 during thermal runaway are shown in Table 2.

**Table 1**

| | W₁ | W₂ | W₁/W₂ | G₃ | G₁ | G₃/G₁ | W₁/G₃ | E₃ | E₃/W₁ | E₁ | E₃/ E₁ |
|---|---|---|---|---|---|---|---|---|---|---|---|
| Example 1 | 1.9 | 2 | 0.95 | 0.025 | 0.05 | 0.5 | 76 | 60 | 31.579 | 40 | 1.5 |
| Example 2 | 1.6 | 2 | 0.8 | 0.025 | 0.05 | 0.5 | 64 | 60 | 37.5 | 40 | 1.5 |
| Example 3 | 1.4 | 2 | 0.7 | 0.025 | 0.05 | 0.5 | 56 | 60 | 42.857 | 40 | 1.5 |
| Example 4 | 1 | 2 | 0.5 | 0.025 | 0.05 | 0.5 | 40 | 60 | 60 | 40 | 1.5 |
| Example 5 | 0.6 | 2 | 0.3 | 0.025 | 0.05 | 0.5 | 24 | 60 | 100 | 40 | 1.5 |
| Example 6 | 0.4 | 2 | 0.2 | 0.025 | 0.05 | 0.5 | 16 | 60 | 150 | 40 | 1.5 |
| Example 7 | 0.24 | 2 | 0.12 | 0.025 | 0.05 | 0.5 | 9.6 | 60 | 250 | 40 | 1.5 |
| Example 8 | 0.1 | 2 | 0.05 | 0.025 | 0.05 | 0.5 | 4 | 60 | 600 | 40 | 1.5 |
| Example 9 | 0.4 | 2 | 0.2 | 0.0475 | 0.05 | 0.95 | 8.421 | 60 | 150 | 40 | 1.5 |
| Example 10 | 0.4 | 2 | 0.2 | 0.045 | 0.05 | 0.9 | 8.889 | 60 | 150 | 40 | 1.5 |
| Example 11 | 0.4 | 2 | 0.2 | 0.035 | 0.05 | 0.7 | 11.429 | 60 | 150 | 40 | 1.5 |
| Example 12 | 0.4 | 2 | 0.2 | 0.025 | 0.05 | 0.5 | 16 | 60 | 150 | 40 | 1.5 |
| Example 13 | 0.4 | 2 | 0.2 | 0.005 | 0.05 | 0.1 | 80 | 60 | 150 | 40 | 1.5 |
| Example 14 | 0.4 | 2 | 0.2 | 0.0025 | 0.05 | 0.05 | 160 | 60 | 150 | 40 | 1.5 |
| Example 15 | 0.4 | 2 | 0.2 | 0.002 | 0.05 | 0.04 | 200 | 60 | 150 | 40 | 1.5 |
| Example 16 | 0.4 | 2 | 0.2 | 0.0033 | 0.0066 | 0.5 | 120 | 60 | 150 | 40 | 1.5 |
| Example 17 | 0.4 | 2 | 0.2 | 0.004 | 0.008 | 0.5 | 100 | 60 | 150 | 40 | 1.5 |
| Example 18 | 0.4 | 2 | 0.2 | 0.0067 | 0.0133 | 0.5 | 60 | 60 | 150 | 40 | 1.5 |
| Example 19 | 0.4 | 2 | 0.2 | 0.02 | 0.04 | 0.5 | 20 | 60 | 150 | 40 | 1.5 |
| Example 20 | 0.4 | 2 | 0.2 | 0.08 | 0.16 | 0.5 | 5 | 60 | 150 | 40 | 1.5 |
| Example 21 | 0.4 | 2 | 0.2 | 0.4 | 0.8 | 0.5 | 1 | 60 | 150 | 40 | 1.5 |
| Example 22 | 0.01 6 | 0.08 | 0.2 | 0.016 | 0.032 | 0.5 | 1 | 200 | 12500 | 133. 3 | 1.5 |
| Example 23 | 0.02 | 0.1 | 0.2 | 0.016 | 0.032 | 0.5 | 1.25 | 200 | 10000 | 133. 3 | 1.5 |
| Example 24 | 0.05 | 0.25 | 0.2 | 0.016 | 0.032 | 0.5 | 3.125 | 200 | 4000 | 133. 3 | 1.5 |
| Example 25 | 0.12 | 0.6 | 0.2 | 0.016 | 0.032 | 0.5 | 7.5 | 22. 8 | 190 | 15.2 | 1.5 |
| Example 27 | 1.2 | 6 | 0.2 | 0.016 | 0.032 | 0.5 | 75 | 6 | 5 | 4 | 1.5 |
| Example 28 | 1.2 | 6 | 0.2 | 0.016 | 0.032 | 0.5 | 75 | 4.8 | 4 | 3.2 | 1.5 |
| Example 29 | 0.4 | 2 | 0.2 | 0.025 | 0.05 | 0.5 | 16 | 240 | 600 | 40 | 6 |
| Example 30 | 0.4 | 2 | 0.2 | 0.025 | 0.05 | 0.5 | 16 | 200 | 500 | 40 | 5 |
| Example 31 | 0.4 | 2 | 0.2 | 0.025 | 0.05 | 0.5 | 16 | 40 | 100 | 40 | 1 |
| Example 32 | 0.4 | 2 | 0.2 | 0.025 | 0.05 | 0.5 | 16 | 32 | 80 | 40 | 0.8 |
| Comparative Example 1 | 1.96 | 2 | 0.98 | 0.025 | 0.05 | 0.5 | 78.4 | 60 | 30.612 | 40 | 1.5 |
| Comparative Example 2 | 0.04 | 2 | 0.02 | 0.025 | 0.05 | 0.5 | 1.6 | 60 | 1500 | 40 | 1.5 |

**Table 2**

| | Q₁ | Q₂ |
|---|---|---|
| Example 1 | 0.8% | 9.2% |
| Example 2 | 1.2% | 8% |
| Example 3 | 2.4% | 5.4% |
| Example 4 | 2.8% | 3.4% |
| Example 5 | 3.2% | 2.6% |
| Example 6 | 3.6% | 1.6% |
| Example 7 | 5.2% | 1.2% |
| Example 8 | 8.4% | 0.8% |
| Example 9 | 10.2% | 0.6% |
| Example 10 | 9% | 1% |
| Example 11 | 6.4% | 1.4% |
| Example 12 | 3.2% | 2.4% |
| Example 13 | 1.8% | 3.8% |
| Example 14 | 0.8% | 6.2% |
| Example 15 | 0.6% | 8.4% |
| Example 16 | 0.6% | 8% |
| Example 17 | 1.4% | 4.0% |
| Example 18 | 2% | 3.4% |
| Example 19 | 3.4% | 1.8% |
| Example 20 | 4% | 1.4% |
| Example 21 | 8.2% | 1% |
| Example 22 | 9.2% | 0.8% |
| Example 23 | 6.4% | 2% |
| Example 24 | 3.2% | 3.4% |
| Example 25 | 2.2% | 4.6% |
| Example 27 | 1% | 6.8% |
| Example 28 | 0.6% | 8.0% |
| Example 29 | 1.2% | 8.2% |
| Example 30 | 1.8% | 5.4% |
| Example 31 | 7.2% | 1.4% |
| Example 32 | 8% | 1% |
| Comparative Example 1 | 0.6% | 15.0% |
| Comparative Example 2 | 14.8% | 0.6% |

Combining Table 1 and Table 2, it can be seen from the comparison between Examples 1 to 8 and Comparative Example 1 that when W₁/W₂>0.95, the explosion rate of the battery cell 20 during thermal runaway is relatively high, and the explosion rate is greater than 12%. **It** can be seen from comparison between Examples 1 to 8 and Comparative Example 2 that when W₁/W₂<0.05, the cracking rate of the first groove bottom wall 2312 at the position of the score groove 232 under normal use conditions of the battery cell 20 is relatively high, and the cracking rate is greater than 12%. When 0.05≤W₁/W₂≤0.95, the risk of the first groove bottom wall 2312 being broken at the position of the score groove 232 under normal use conditions of the battery cell 20 can be reduced, and the pressure can be released in time through the first groove bottom wall 2312 at the position of the score groove 232 when the battery cell 20 undergoes thermal runaway, thereby reducing the risk of occurrence of explosion of the battery cell 20. It can be seen from Examples 2 to 7 that when 0.12≤W₁/W₂≤0.8, the comprehensive performance of the battery cell 20 is better, the cracking rate of the first groove bottom wall 2312 at the position of the score groove 232 under normal use conditions of the battery cell 20 and the explosion rate of the battery cell 20 during thermal runaway are both low, and when 0.2:5W₁/W₂≤0.5, the effect is better.

It can be known from Examples 10 to 15 that when G₃/G₁≤0.9, the cracking rate of the first groove bottom wall 2312 at the position of the score groove 232 under normal use conditions of the battery cell 20 is relatively low. In Example 9, G₃/G₁ >0.9, and the cracking rate of the first groove bottom wall 2312 at the position of the score groove 232 under normal use conditions of the battery cell 20 significantly increases. It can be seen from comparison between Examples 10 to 15 and Example 9 that by controlling G₃/G₁ to not more than 0.9, the risk of the first groove bottom wall 2312 at the position of the score groove 232 being damaged under normal use conditions of the battery cell 20 is effectively reduced, thus prolonging the service life of the battery cell 20.

It can be known according to Example 15 that when G₃/G₁ <0.05, the difficulty of destroying the first groove bottom wall 2312 at the position of the score groove 232 during thermal runaway of the battery cell 20 increases, and if the pressure is not released in time, the risk of occurrence of explosion of the battery cell 20 increases significantly. It can be seen from comparison between Examples 9 to 14 and 15 that controlling G₃/G₁ to be not less than 0.5 can effectively reduce the explosion rate of the battery cell 20 during thermal runaway. When 0.1≤G₃/G₁≤0.5, the cracking rate of the first groove bottom wall 2312 at the position of the score groove 232 under normal use conditions of the battery cell 20 and the explosion rate of the battery cell 20 during thermal runaway are both low, ensuring that the first groove bottom wall 2312 has sufficient strength at the position of the score groove 232 under normal use conditions of the battery cell 20 in the case where it is ensured that the first groove bottom wall 2312 can be destroyed in time at the position of the score groove 232 when the battery cell 20 has thermal runaway.

It can be seen from comparison between Examples 17 to 21 and Example 16 that when 1≤W₁/G₃≤100, the battery cell 20 can release pressure in time when thermal runaway occurs, and the explosion rate of the battery cell 20 is low. When 5≤W₁/G₃≤20, the comprehensive performance of the battery cell 20 is better, and the cracking rate of the first groove bottom wall 2312 at the position of the score groove 232 under normal use conditions of the battery cell 20 and the explosion rate of the battery cell 20 during thermal runaway are both low.

It can be seen from comparison between Examples 23 to 27 and Example 22 that when E₃/W₁>10000 HBW/mm, the cracking rate of the first groove bottom wall 2312 at the position of the score groove 232 under normal use conditions of the battery cell 20 is relatively high. It can be seen from comparison between Examples 23 to 27 and Example 28 that when E₃/W₁<5HBW/mm, the explosion rate of the battery cell 20 during thermal runaway is relatively high. When 5HBW/mm≤5E3/W₁≤510000 HBW/mm, the risk of the first groove bottom wall 2312 being broken at the position of the score groove 232 under normal use conditions of the battery cell 20 can be reduced, and the battery cell 20 can release the pressure in time through the first groove bottom wall 2312 at the position of the score groove 232 when undergoing thermal runaway, reducing the risk of occurrence of explosion of the battery cell 20. It can be seen from Examples 24 to 25 that when 190HBW/mm≤E₃/W₁≤4000HBW/mm, the comprehensive performance of the battery cell 20 is better, and the cracking rate of the first groove bottom wall 2312 at the position of the score groove 232 under normal use conditions of the battery cell 20 and the explosion rate of the battery cell 20 during thermal runaway are both low.

It can be seen from comparison between Examples 29 to 30 and Examples 31 to 32 that when E₃/E₁≤1, the cracking rate of the first groove bottom wall 2312 at the position of the score groove 232 under normal use conditions of the battery cell 20 is relatively high. When E₃/E₁>1, the cracking rate of the first groove bottom wall 2312 at the position of the score groove 232 under normal use conditions of the battery cell 20 can be reduced. It can be seen from comparison between Example 30 and Example 29 that when E₃/ E₁>5, the explosion rate of the battery cell 20 during thermal runaway is high. When E₃/ E₁≤5, the risk of occurrence of explosion of the battery cell 20 can be reduced.

Embodiments of the present application further provide a battery 100, including at least one battery cell 20 above.

Embodiments of the present application further provide an electric device, including at least one battery 100 above. The battery 100 is used to provide electric energy for the electric device.

According to some embodiments of the present application, reference is made to FIG. 3 to FIG. 14.

Embodiments of the present application provide a battery cell 20. The battery cell 20 includes electrode assemblies 22, a shell 21 and a pressure relief mechanism 23. The shell 21 is used to accommodate the electrode assemblies 22. The shell 21 has a wall part 213 supporting the electrode assemblies 22 in the gravity direction, and the pressure relief mechanism 23 is disposed on the wall part 213 and is integrally formed with the wall part 213. During normal use of the battery cell 20, the pressure relief mechanism 23 is located at the lower portion of the shell 21. Compared with the prior art in which the pressure relief mechanism 23 is welded to the end cover 211, the present application makes the pressure relief mechanism 23 and the wall part 213 formed integrally, thereby avoiding leakage caused by welding defects. In addition, the ability of the pressure relief mechanism 23 to resist external impacts can also be enhanced. At the same time, since the electrolytic solution inside the shell 21 may cause creep deformation or impact on the pressure relief mechanism 23, that the pressure relief mechanism 23 and the shell 21 are integrally formed can improve the rigidity of the pressure relief mechanism 23, so that the pressure relief mechanism 23 has a stronger resistance to the creep deformation and impact of the electrolytic solution, which is beneficial to increase the life of the pressure relief mechanism 23 and reduce the risk of leakage in the pressure relief mechanism 23.

The wall part 213 has a first surface 2131 and a second surface 2132 that are opposite to each other in the thickness direction thereof. The pressure relief mechanism 23 includes a score groove 232 and at least one stage of depressed groove 231. The at least one stage of depressed groove 231 and the score groove 232 are sequentially arranged on the wall part 213 in the direction from the first surface 2131 to the second surface 2132. In the above, the first groove bottom wall 2312 of the stage of depressed groove 231 farthest away from the first surface 2131 has an opening region 23121, and the score groove 232 is disposed along the edge of the opening region 23121, and the opening region 23121 is configured to be able to be opened with the score groove 232 as a boundary. The at least one stage of depressed groove 231 and the score groove 232 are sequentially provided on the wall part 213 in the direction from the first surface 2131 to the second surface 2132. During forming, the depressed groove 231 and the score groove 232 may be formed stage by stage, thereby reducing the forming force that the wall part 213 suffers and reducing the risk of cracks being generated on the wall part 213. The pressure relief mechanism 23 is not prone to failure due to cracks generated at the position of the score groove 232, thereby improving the long-term reliability of the pressure relief device. In addition, when forming the depressed groove 231 and the score groove 232, stamping or cold heading or other manners may be used, so that the groove walls of the depressed groove 231 and the score groove 232 may undergo cold work hardening (the grain arrangement changes, resulting in lattice distortion, which reduces the metal plasticity and increases the material hardness), and its ability to resist external impact is enhanced, and it is not easily damaged by external impact. This helps reduce the risk of leakage from the pressure relief mechanism 23.

The wall part 213 partially protrudes from the second surface 2132 in a direction away from the first surface 2131 to form a reinforcement part 2133. The reinforcement part 2133 is provided surrounding the periphery of the first groove bottom wall 2312. The wall part 213 partially protrudes from the second surface 2132 in a direction away from the first surface 2131 to form the reinforcement part 2133, so that when the wall part 213 is deformed, the reinforcement part 2133 can reduce the influence of the deformation on the score groove 232, thereby reducing the risk of leakage of the pressure relief mechanism 23.

The opening region 23121 bends in the direction from the second surface 2132 to the first surface 2131. When the opening region 23121 bends in the direction from the second surface 2132 to the first surface 2131, the gas inside the battery cell 20 may generate, when acting on the opening region 23121, a pulling force on the first groove bottom wall 2312 at the position of the score groove 232, so that the first groove bottom wall 2312 is easy to be opened at the position of the score groove 232, and under the same detonation pressure, the depth of the score groove 232 may be smaller and the thickness of the first groove bottom wall 2312 at the position where the score groove 232 may be greater, so that the first groove bottom wall 2312 is not easy to be opened by external interference at the position of the score groove 232, thereby reducing the risk of leakage of the pressure relief mechanism 23. When the electrolytic solution acts on the opening region 23121, the acting force is relatively small. Although a pulling force is generated on the first groove bottom wall 2312 at the position of the score groove 232, it is not enough to cause the score groove 232 to be opened. In addition, the pulling force generated on the first groove bottom wall 2312 at the position of the score groove 232 disperses the acting force of the electrolytic solution, making the amplitude of the opening region 23121 reduced, and enabling the pressure relief mechanism 23 to be not easy to open under the action of the electrolytic solution, thereby reducing the risk of leakage of the pressure relief mechanism 23.

The above are only preferred embodiments of the present application and are not intended to limit the present application. For those skilled in the art, the present application may have various modifications and variations. Any modifications, equivalent replacements, improvements, etc. made within the spirit and principles of the present application shall be included in the protection scope of the present.

## Claims

1. A battery cell, comprising:
at least one electrode assembly;
a shell configured for accommodating the at least one electrode assembly; and
a pressure relief mechanism provided on a lower portion of the shell and integrally formed with the shell.

2. The battery cell according to claim 1, wherein the pressure relief mechanism is provided below a median vertical plane of the shell which is perpendicular to a height direction thereof.

3. The battery cell according to claim 2, wherein the shell has a wall part configured for supporting the at least one electrode assembly in a gravity direction, and the pressure relief mechanism is provided on the wall part and is integrally formed with the wall part.

4. The battery cell according to any one of claims 1 to 3, wherein the shell comprises a wall part, the pressure relief mechanism is provided at the wall part, and the wall part has an opening region;
the wall part has a first surface and a second surface opposite to each other in a thickness direction thereof; and
the pressure relief mechanism comprises a score groove, the score groove is recessed in a direction from the first surface to the second surface, the score groove is provided along an edge of the opening region, and the opening region is configured to be able to be opened with the score groove as a boundary.

5. The battery cell according to claim 4, wherein the pressure relief mechanism comprises at least one stage of depressed groove, the at least one stage of depressed groove being arranged on the wall part in sequence in the direction from the first surface to the second surface; and
a first groove bottom wall of a stage of depressed groove farthest away from the first surface has the opening region.

6. The battery cell according to claim 5, wherein the pressure relief mechanism comprises two stages of depressed grooves, the two stages of depressed groove being provided in sequence in the direction from the first surface to the second surface; and one stage of the depressed groove is provided on the first surface, the other stage of the depressed groove is provided at a bottom surface of the one stage of depressed groove, and the score groove is provided at a bottom surface of the other one stage of the depressed groove.

7. The battery cell according to any one of claims 4 to 6, wherein the pressure relief mechanism comprises a plurality of stages of score grooves, the plurality of stages of depressed grooves being arranged on the wall part in sequence in the direction from the first surface to the second surface; and
in adjacent two stages of depressed grooves, one stage of depressed groove away from the first surface is provided on a bottom surface of one stage of depressed groove close to the first surface.

8. The battery cell according to any one of claims 4 to 7, wherein in the thickness direction, a surface of the opening region away from the first surface is flush with the second surface.

9. The battery cell according to any one of claims 4 to 7, wherein the wall part partially protrudes from the second surface in a direction away from the first surface, to form a reinforcement part; and
the reinforcement part is provided surrounding a periphery of the opening region.

10. The battery cell according to claim 9, wherein in the thickness direction, a surface of the opening region away from the first surface is flush with a surface of the reinforcement part away from the first surface.

11. The battery cell according to claim 9 or 10, wherein in the thickness direction, a height of the reinforcement part protruding from the second surface is A, satisfying: 0.5mm≤A≤4mm.

12. The battery cell according to claim 11, wherein 1mm≤A≤2.5mm.

13. The battery cell according to any one of claims 4 to 12, wherein the opening region is provided bending in the thickness direction.

14. The battery cell according to claim 13, wherein the opening region bends in a direction from the second surface to the first surface.

15. The battery cell according to claim 13 or 14, wherein the pressure relief mechanism comprises at least one stage of depressed groove, the at least one stage of depressed groove being arranged on the wall part in sequence in the direction from the first surface to the second surface, and a first groove bottom wall of one stage of depressed groove farthest away from the first surface has the opening region;
the first groove bottom wall comprises a main body region, the main body region is provided surrounding the opening region, and the score groove is provided between the opening region and the main body region; and
in the thickness direction, the main body region has a third surface and a fourth surface, a distance between the third surface and the fourth surface is **B,** the opening region has a fifth surface away from the second surface, the third surface and the fifth surface are located on a same side of the first groove bottom wall, and a maximum distance between the third surface and the fifth surface is C, satisfying: B/10≤C≤B.

16. The battery cell according to any one of claims 4 to15, wherein the first surface is an outer surface of the wall part.

17. The battery cell according to any one of claims 4 to 16, wherein
the pressure relief mechanism comprises at least one stage of depressed groove, the at least one stage of depressed groove being provided on the wall part in sequence in the direction from the first surface to the second surface, and a first groove bottom wall of one stage of depressed groove farthest away from the first surface has the opening region; and
a strength of the wall part is D₁, a strength of the second groove bottom wall of one stage of depressed groove closest to the first surface is D₂, and a strength of the first groove bottom wall at a position of the score groove is D₃, satisfying: D₃> D₂≥D₁; and/or
a hardness of the wall part is E₁, a hardness strength of the second groove bottom wall is E₂, and a hardness of the first groove bottom wall at the position of the score groove is E₃, satisfying: E₃>E₂≥E₁; and/or
a rigidity of the wall part is F₁, a rigidity of the second groove bottom wall is F₂, and a rigidity of the first groove bottom wall at the position of the score groove is F₃, satisfying: F₃>F₂≥F₁.

18. The battery cell according to claim 17, wherein 1.2E₁≤E₂≤2.5E₁.

19. The battery cell according to claim 17, wherein 2.5E₁<E₃≤5E₁.

20. The battery cell according to any one of claims 17 to 19, wherein 5HBW≤E₁≤150HBW.

21. The battery cell according to any one of claims 17 to 20, wherein 5HBW≤E₃≤200HBW.

22. The battery cell according to any one of claims 17 to 21, wherein a minimum thickness of the first groove bottom wall at the position of the score groove is W₁, satisfying: 5HBW/mm≤E₃/W₁≤10000 HBW/mm; preferably, 190HBW/mm≤E₃/W₁≤4000 HBW/mm.

23. The battery cell according to any one of claims 4 to 22, wherein a minimum thickness of the wall part at the position of the score groove is W₁, and a minimum thickness of the wall part is W₂, satisfying: 0.05≤W₁/W₂≤0.95.

24. The battery cell according to claim 23, wherein 0.12≤W₁/W₂≤0.8; preferably, 0.2≤W₁/W₂≤0.5.

25. The battery cell according to claim 23 or 24, wherein 0.02mm≤W₁≤1.6mm; preferably, 0.06mm≤W₁≤0.4mm.

26. The battery cell according to any one of claims 23 to 25, wherein 1mm≤W₂≤5mm; preferably, 1.2mm≤W₂≤3.5mm; preferably, 2mm≤W₂≤3mm.

27. The battery cell according to any one of claims 4 to 26, wherein the pressure relief mechanism comprises at least one stage of depressed groove, the at least one stage of depressed groove being arranged on the wall part in sequence in the direction from the first surface to the second surface, and a first groove bottom wall of one stage of depressed groove farthest away from the first surface has the opening region;
an average grain size of the wall part is G₁, an average grain size of a second groove bottom wall of one stage of depressed groove closest to the first surface is G₂, and an average grain size of the first groove bottom wall at the position of the score groove is G₃, satisfying: G₁>G₂>G₃.

28. The battery cell according to claim 27, wherein G₃/ G₁≤ 0.9.

29. The battery cell according to claim 28, wherein G₃/G₁≥0.05; preferably, 0.1≤G₃/G₁≤0.5.

30. The battery cell according to any one of claims 27 to 29, wherein 0.4µm≤G₃≤75µm; preferably, 1µm≤G₃≤10µm.

31. The battery cell according to any one of claims 27 to 30, wherein 10µm≤G₁≤150µm; preferably, 30µm≤G₁≤100µm.

32. The battery cell according to any one of claims 27 to 31, wherein a minimum thickness of a first groove bottom wall at the position of the score groove is W₁, and
an average grain size of the first groove bottom wall at the position of the score groove is G₃, satisfying: 1≤W₁/G₃≤100; preferably, 5≤W₁/G₃≤20.

33. The battery cell according to any one of claims 1 to 32, wherein the shell comprises a casing and an end cover, the casing has an opening, the end cover is connected to the casing and seals the opening, and the pressure relief mechanism is provided on the end cover.

34. The battery cell according to any one of claims 1 or 33, wherein the shell comprises a casing and an end cover, the casing has an opening, the end cover is connected to the casing and seals the opening, and the pressure relief mechanism is provided on the shell.

35. The battery cell according to claim 34, wherein in a first direction, two ends of the shell each have an opening, the shell comprises two end covers, and each of the end covers seals one corresponding opening.

36. A battery, comprising at least one battery cell each according to any one of claims 1 to 35.

37. An electric device, comprising at least one battery each according to claim 36, wherein the battery is configured to provide electric energy for the electric device.
